# EUROPEAN PATENT APPLICATION

(11) **EP 4 761 414 A1**
(43) Date of publication of application: **17.06.2026**
(21) Application number: 25223162.6
(22) Date of filing: 12.12.2025
(51) Int. Cl.: H04W 72/0453

(54) **SYSTEMS, METHODS, AND APPARATUSES FOR DETERMINING FREQUENCY SEPARATION IN A NETWORK**

(30) Priority: 12.12.2024 US 202418978871
(71) Applicant: Comcast Cable Communications, LLC, Philadelphia, PA 19103 (US)
(72) Inventor: PARATHI, Suresh, Philadelphia, PA 19103-2802 (US); URBAN, David J., Philadelphia, PA 19103-2802 (US); DEVOTTA, Dinesh, Philadelphia, PA 19103-2802 (US); SZYMANIK, Colleen, Philadelphia, PA 19103-2802 (US)
(74) Representative: V.O.

(57) **Abstract**

Methods, systems, and apparatuses are provided for selecting communication channels based on frequency separation requests for a first frequency band and a second frequency band. The system may receive one or more frequency separation requests and determine a first portion of a plurality of devices associated with one or more higher priority level device types and a second portion of the plurality of devices associated with one or more lower priority level device types. The system may determine a maximum frequency separation request associated with at least one of the first portion of the plurality of devices associated with the one or more higher priority level devices. The system may select one or more of a second communication channel of the first frequency band and a second communication channel of the second frequency band based on the maximum frequency separation request associated with the higher priority level devices.

## Description

### BACKGROUND

Wireless communication networks have become ubiquitous in modern society, enabling connectivity for a wide range of devices and applications. As the number and diversity of wireless devices continue to grow, so does the demand for efficient and reliable wireless communication. Multi-band operation, which allows devices to communicate across different frequency bands, has emerged as a key technology to meet these increasing demands.

In multi-band wireless networks, devices may communicate using multiple frequency bands, such as the 2.4 GHz, 5 GHz, and 6 GHz bands. This capability offers several advantages, including increased capacity, reduced interference, and improved reliability. However, managing communications across multiple frequency bands also presents challenges, particularly in terms of channel selection and allocation.

One of the primary challenges in multi-band wireless networks is determining the optimal channels to use in each frequency band. This decision can be influenced by various factors, including signal strength, interference levels, network congestion, and the specific requirements of different devices and applications. Additionally, the dynamic nature of wireless environments means that the optimal channel selection may change over time, necessitating adaptive approaches.

Another consideration in multi-band wireless networks is the varying capabilities and priorities of different devices. Some devices may have specific requirements for frequency separation between bands, while others may be more flexible. Moreover, certain types of devices or applications may require higher priority in channel allocation to ensure optimal performance.

As wireless networks continue to evolve and support an ever-growing ecosystem of devices and applications, there is a need for improved methods and systems for managing multi-band communications. These improvements should aim to enhance overall network performance, accommodate diverse device requirements, and adapt to changing network conditions.

### SUMMARY

It is to be understood that both the following general description and the following detailed description are exemplary and explanatory only and are not restrictive. Methods and systems for determining frequency separation in a network are described.

Methods, systems, and apparatuses are provided for selecting communication channels based on frequency separation requests for a first frequency band and a second frequency band. A computing device, such as a network device (e.g., an access point, router, or gateway), may communicate with devices via a first channel of a first frequency band and a second channel of a second frequency band. The computing device may determine to change one or both of the first channel and second channel. The computing device may receive a plurality of frequency separation requests from the devices communicating with the computing device. The computing device may determine a priority order for the devices and then determine which frequency separation requests the computing device will try to satisfy based on that priority order of the device. The computing device may then select a new channel in one or both of the first and second frequency bands that has a frequency separation that satisfies the frequency separation request of one or more higher priority devices.

This summary is not intended to identify critical or essential features of the disclosure, but merely to summarize certain features and variations thereof. Other details and features will be described in the sections that follow.

### BRIEF DESCRIPTION OF THE DRAWINGS

The accompanying drawings, which are incorporated in and constitute a part of the present description serve to explain the principles of the apparatuses and systems described herein:
FIG. 1 shows an example system;
FIGs. 2A-C show an example system;
FIG. 3 shows an example system;
FIG. 4 shows an example of frequency bands;
FIG. 5 shows a flowchart of an example method;
FIG. 6 shows a flowchart of an example method;
FIG. 7 shows a flowchart of an example method;
FIG. 8 shows a flowchart of an example method;
FIG. 9 shows a flowchart of an example method;
FIG. 10 shows a flowchart for an example method;
FIG. 11 shows a flowchart for an example method;
FIG. 12 shows a flowchart for an example method;
FIG. 13 shows a flowchart for an example method;
FIG. 14 shows a flowchart for an example method;
FIG. 15 shows a flowchart for an example method;
FIG. 16 shows a flowchart for an example method; and
FIG. 17 shows an example system.

### DETAILED DESCRIPTION

As used in the specification and the appended claims, the singular forms "a, " "an," and "the" include plural referents unless the context clearly dictates otherwise. Ranges may be expressed herein as from "about" one particular value, and/or to "about" another particular value. When such a range is expressed, another configuration includes from the one particular value and/or to the other particular value. Similarly, when values are expressed as approximations, by use of the antecedent "about," it will be understood that the particular value forms another configuration. It will be further understood that the endpoints of each of the ranges are significant both in relation to the other endpoint, and independently of the other endpoint.

"Optional" or "optionally" means that the subsequently described event or circumstance may or may not occur, and that the description includes cases where said event or circumstance occurs and cases where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of" and is not intended to convey an indication of a preferred or ideal configuration. "Such as" is not used in a restrictive sense, but for explanatory purposes.

It is understood that when combinations, subsets, interactions, groups, etc. of components are described that, while specific reference of each various individual and collective combinations and permutations of these may not be explicitly described, each is specifically contemplated and described herein. This applies to all parts of this application including, but not limited to, steps in described methods. Thus, if there are a variety of additional steps that may be performed it is understood that each of these additional steps may be performed with any specific configuration or combination of configurations of the described methods.

As will be appreciated by one skilled in the art, hardware, software, or a combination of software and hardware may be implemented. Furthermore, a computer program product on a computer-readable storage medium (e.g., non-transitory) having processor-executable instructions (e.g., computer software) embodied in the storage medium. Any suitable computer-readable storage medium may be utilized including hard disks, CD-ROMs, optical storage devices, magnetic storage devices, memresistors, Non-Volatile Random Access Memory (NVRAM), flash memory, or a combination thereof.

Throughout this application reference is made to block diagrams and flowcharts. It will be understood that each block of the block diagrams and flowcharts, and combinations of blocks in the block diagrams and flowcharts, respectively, may be implemented by processor-executable instructions. These processor-executable instructions may be loaded onto a general purpose computer, special purpose computer, or other programmable data processing apparatus to produce a machine, such that the processor-executable instructions which execute on the computer or other programmable data processing apparatus create a device for implementing the functions specified in the flowchart block or blocks.

These processor-executable instructions may also be stored in a computer-readable memory that may direct a computer or other programmable data processing apparatus to function in a particular manner, such that the processor-executable instructions stored in the computer-readable memory produce an article of manufacture including processor-executable instructions for implementing the function specified in the flowchart block or blocks. The processor-executable instructions may also be loaded onto a computer or other programmable data processing apparatus to cause a series of operational steps to be performed on the computer or other programmable apparatus to produce a computer-implemented process such that the processor-executable instructions that execute on the computer or other programmable apparatus provide steps for implementing the functions specified in the flowchart block or blocks.

Blocks of the block diagrams and flowcharts support combinations of devices for performing the specified functions, combinations of steps for performing the specified functions and program instruction means for performing the specified functions. It will also be understood that each block of the block diagrams and flowcharts, and combinations of blocks in the block diagrams and flowcharts, may be implemented by special purpose hardware-based computer systems that perform the specified functions or steps, or combinations of special purpose hardware and computer instructions.

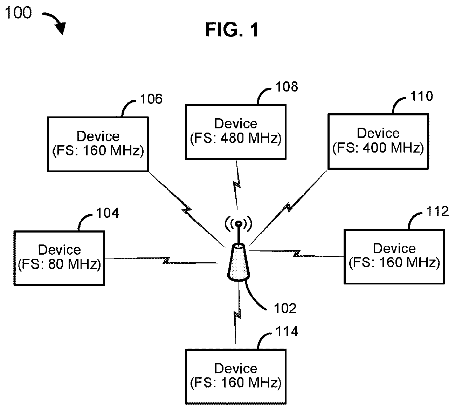

FIG. 1 shows a system **100** for selecting communication channels based on frequency separation requests for a first frequency band and a second frequency band. Although only certain devices and/or components are shown, the system **100** may comprise a variety of other devices and/or components that support a wide variety of network and/or communication functions, operations, protocols, content, services, and/or the like. For example, the system **100** may support and/or facilitate a Domain Name System (DNS), Hypertext Transfer Protocol (HTTP), Hypertext Transfer Protocol Secure (HTTPS), DNS over HTTPS (DoH), Transport Layer Security (TLS) protocol, DNS over TLS (DoT), encrypted DNS, and/or the like.

The system **100** may comprise a network. The network may comprise a packet-switched network (e.g., an Internet protocol-based network), a non-packet switched network (e.g., quadrature amplitude modulation based network), and/or the like. The network may comprise network adapters, switches, routers, modems, and the like connected through wireless links (e.g., radiofrequency, satellite, etc.) and/or physical links (e.g., fiber optic cable, coaxial cable, Ethernet cable, or a combination thereof). The network may comprise public networks, private networks, wide area networks (e.g., Internet), local area networks, and/or the like. The network may comprise a content access network, content distribution network, and/or the like. The network may be configured to provide communication from telephone, cellular, modem, and/or other electronic devices to and throughout the system **100.** The network and/or devices in communication and/or associated with the network may provide, facilitate, and/or support one or more services, applications, and/or protocols, such as a DNS, HTTP, HTTPS, DoH, TLS protocol, DoT, encrypted DNS, and/or the like. The network may be configured to include one or more computing devices **102** and one or more devices **104-114,** and/or any other device/component.

The computing device **102** may be a computer and comprise a network device. For example, the computing device **102** may comprise an access point, gateway, or router. For example, the computing device **102** may be configured to operate in a simultaneous transmit and receive mode and allows the computing device **102** to simultaneously send communications to one device of the plurality of devices **104-114** and receive communications from another device of the plurality of devices **104-114.** The computing device **102** may further be configured to allow any one or more of the devices **104-114** to employ multi-link operations with the computing device **102,** such that the one or more of the devices **104-114** may connect and communicate with the computing device **102** via a first communication channel of a first frequency band and via a first communication channel of a second frequency band at the same time. For example, the first frequency band and the second frequency band may be different. For example, the first frequency band may be a five megahertz (MHz) band and the second frequency band may be a six MHz band. For example, the first frequency band may be a frequency band other than the five MHz band and the second frequency band may be a frequency band other than the six MHz band.

The computing device **102** may comprise a session management module. The computing device **102** may receive a request for a communication session and use the session management module to determine and/or generate a corresponding session token (and/or a session ID). A session token (and/or a session ID) may be determined/generated through a random unique string generating process, a hashing algorithm, and/or any other method/means. A session token (and/or a session ID) may be stored (e.g., in a communication management array table), for example, by the computing device **102,** in a local and/or remote storage (e.g., a database) with associated information, such as a device identifier, user/client identifier, device type, a time interval (e.g., a time-to-live (TTL) value, etc.), a device profile, and/or the like. A session token (and/or a session ID) may be encrypted and/or decrypted in accordance with the protocols (e.g., TLS protocol, etc.) associated with the system **100.**

The computing device **102** may also comprise a clock and/or timer for monitoring requests for communication sessions and communications sessions (e.g., a communication session between one of the devices **104-114** and the computing device **102).** A time interval associated with a request for a communication session may be determined, for example, by the computing device **102.** The computing device **102,** based on the nature of a request for a communication session, may determine and/or update a predetermined and/or default time interval and/or determine a time interval during which the one of the devices **104-114** may establish and/or re-establish the communication session using a session token.

The computing device **102** may respond to a request for a communication session from a device **104-114** with a session token (and/or a session ID) and an indication of a determined time interval for the session token. The session token may be, for example, encrypted and embedded within a response to the device **104-114** according to the protocol of the system **100,** such as a TLS protocol or the like. The computing device **102** may then implement the clock/timer to monitor the time interval.

The system **100** may further comprise a plurality of devices **104-114.** While six devices **104-114** are shown in the system **100,** this is for example purposes only and greater or fewer devices **104-114** may be included in the system and communicating with the computing device **102** via one or more communication sessions. For example, one or more of the devices **104-114** may be configured for multi-link operation with the computing device **102,** such that the device may be able to connect to the computing device **102** and have a first communication session with the computing device **102** via a first channel of a first frequency band and a second communication session with the computing device **102** via a first channel of a second frequency band.

The plurality of devices **104-114** (e.g., a mesh extender, subordinate device, augmented reality device, virtual reality device, a client device, a personal computer, computing station, workstation, portable computer, laptop computer, mobile phone, tablet computer, smartphone, smartwatch, activity tracker, smart apparel, smart accessory, a game system, an IoT device, a thermostat, a home appliance, etc.) may be associated with device identifier. The device identifier may be any identifier, token, character, string, or the like, for differentiating one device (e.g., device **104)** of the plurality of devices **104-114** from another device (e.g., device **106)** of the plurality of devices **104-114.** The device identifier may identify a device **104-114** as belonging to a particular type or group of devices. The device identifier may comprise information relating to the device **104-114,** such as a manufacturer, a model or type of device, a service provider associated with the device **104-114,** a state of the device **104-114,** a locator, a label, and/or classifier. Other information may be represented by the device identifier.

The device identifier may comprise an address element and a service element. The address element may comprise a network address (e.g., an IP address, etc.), a media access control (MAC) address, or the like. The address element may be used to establish a communication session between the particular device **104-114,** the computing device **102,** other devices and/or components of the system **100,** and/or the like. The address element may be used as an identifier and/or locator of the particular device **104-114.** The address element may be persistent for a particular network.

The service element may comprise an identification of a service provider associated with the particular device **104-114** and/or with the class, type, or group of types of the particular device **104-114.** The class, type, or group of types of the device **104-114** may be related to a type of device, a group of device types, a device capability, a type of service being provided, and/or a level of service (e.g., business class, service tier, service package, etc.). The service element may comprise information associated with a communication service provider (e.g., Internet service provider) that is providing or enabling data flow such as communication services to the particular device **104-114.** The service element may comprise information relating to a preferred service provider for one or more particular services relating to the device **104-114.** The address element may be used to identify or retrieve data from the service element, or vice versa. The address element and/or the service element may be stored remotely from the particular device **104-114** and retrieved by one or more devices such as the particular device **104-114,** and/or the computing device 102. Other information may be represented by the service element.

Each device **104-114** may comprise and/or be associated with a communication interface. The communication interface may enable a user to interact with the particular device **104-114,** the computing device 102, and/or any other device/component of the system 100. The communication interface may comprise and/or be associated with software, hardware, and/or interfaces that may be used to provide communication between a user and one or more of the device **104-114,** the computing device **102,** and/or any other device/component of the system **100.** The communication interface may be used to request or query various files from a local source and/or a remote source, such as the computing device **102,** and/or the like.

Each device **104-114** may comprise a client module. The client module may be an application, such as a web application, a user-agent based application (e.g., a single-page, browser-based, application), a native application, a DNS client engine, a mobile application, and or the like that is implemented/run on and/or associated with the particular device **104-114.** The client module may support and/or facilitate one or more services, applications, and/or protocols, such as a DNS, HTTP, HTTPS, DoH, TLS protocol, DoT, encrypted DNS, and/or the like. Each device **104-114** may, for example, via the client module, request a communication session with the computing device 102.

A request for a communication session may be received, for example, as part of an authentication and/or handshake process (e.g., a TLS handshake, etc.) and/or after a successful authentication and/or handshake process. The authentication and/or handshake process may include several interactions between the computing device **102** and the particular device **104-114** before a communication session is initiated between the computing device 102 and the particular device **104-114.** For example, the computing device **102** may receive a request for a communication session as part of an authentication and/or handshake process with the particular device **104-114** and/or after a successful authentication and/or handshake process with the particular device **104-114.**

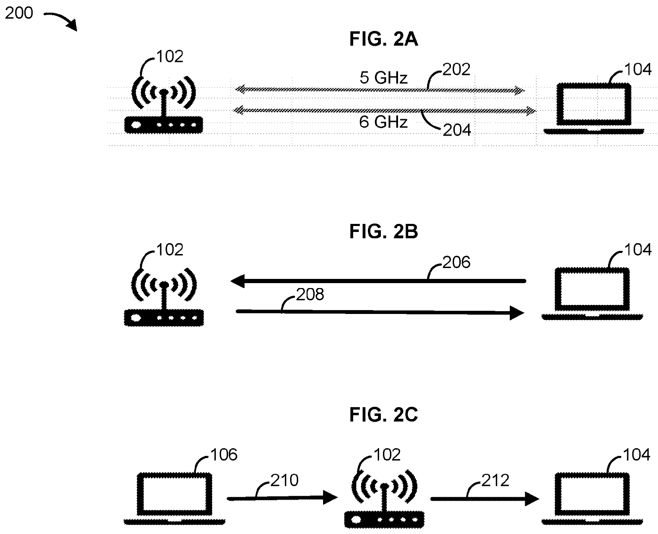

**FIGs. 2A-C** shown an example system **200** capable of multi-link operations and simultaneous transmit and receive operations between a computing device **102** (of **FIG. 1****)** and one of the devices **104** of the plurality of devices **104-114.** In **FIG. 2A****,** the device **104,** as an example of any one of the plurality of devices **104-114,** is configured for multi-link operations with the computing device **102.** For example, the device **104** may connect via a first communication session **202** with the computing device **102.** For example, the first communication session may permit communications between the computing device **102** and the device **104** via a first communication channel on a first frequency band. For example, the first frequency band may be a five MHz frequency band. The device **104** may also, at the same time, connect via a second communication session **204** with the computing device **102.** For example, the second communication session may permit communications between the computing device **102** and the device **104** via a first communication channel on a second frequency band. For example, the second frequency band may be a six MHz frequency band. The device **104** may be configured to both send to and receive communications from the computing device 102 via both the first communication session **202** and the second communication session 204.

In **FIG. 2B****,** the computing device **102** (e.g., a network device, such as an access point, gateway, or router) is configured to simultaneously transmit and receive communications with one or more devices, such as device **104.** Device **104** may also be configured for multi-link operation with the computing device **102.** For example, the device **104** may send a signal or communication via a first communication session **206** that is received by the computing device **102.** Simultaneously or at substantially the same time, the computing device **102** may send a signal or communication via a second communication session **208** that is received by the device **104.** For example, the first communication session **206** may be via a first channel of a first frequency band and the second communication session **208** may be via a first channel of a second frequency band. For example, both the first communication session **206** and the second communication session **208** may be via the same communication channel of the same frequency band.

In **FIG. 2C****,** the computing device **102** (e.g., a network device, such as an access point, gateway, or router) is configured to simultaneously transmit and receive communications with one or more devices, such as the device **104** and the device **106.** For example, the device **106** may send a signal or communication via a first communication session **210** that is received by the computing device **102.** Simultaneously or at substantially the same time, the computing device **102** may send a signal or communication via a second communication session **212** that is received by the device **104.** For example, the first communication session **210** may be via a first channel of a first frequency band and the second communication session **212** may be via a first channel of a second frequency band. For example, both the first communication session **210** and the second communication session **212** may be via the same communication channel of the same frequency band.

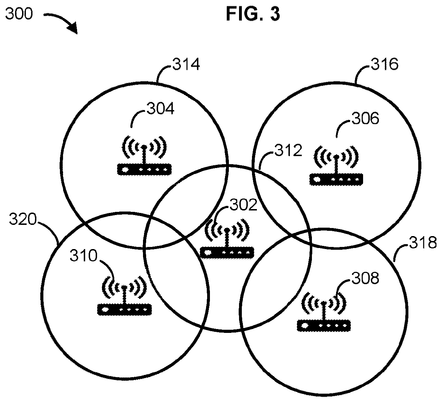

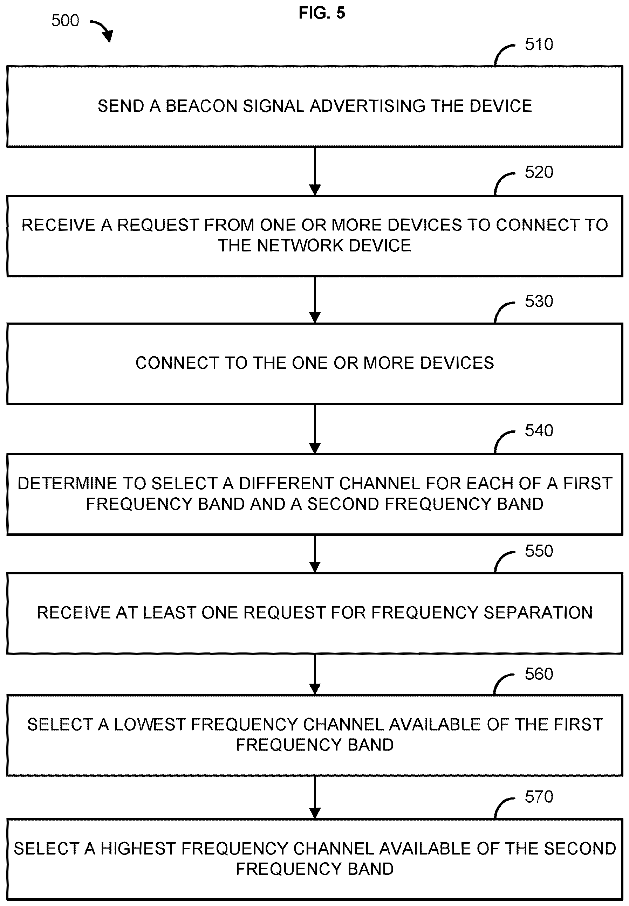

**FIG. 3** shows another portion of a system **300** for selecting channels in a first frequency band and a second frequency band in response to one or more requests for frequency separation from devices, such as device **104-114** of **FIG. 1****.** In addition, to the methods described in **FIGs. 5-14****,** the computing device **302,** which may correspond to the computing device **102** of **FIG. 1** may be in a larger integrated network that includes other computing devices **304-310** (e.g., network devices, such as an access point, gateway, router, etc.). Each of the computing devices **302-310** may have a corresponding network range **312-320** that the respective computing device **302-310** is capable of managing communication sessions within. For example, one or more of these network ranges **312-320** may overlap, such as network range **312** overlapping with each of network ranges **314-320,** network range **314** overlapping with network ranges **312** and **320,** network range **316** overlapping with network ranges **312** and **318,** network range **318** overlapping with network range **312** and **316,** and network range **320** overlapping with network range **312** and **314.** These overlapping network ranges can result in an increased chance for high bandwidth usage in portions of the network range as well as interference and increased noise.

When determining which channels to select in the first frequency band and the second frequency band, computing device **302** may further evaluate the communication channels being used in by each of the other computing devices **314-320** in each of the first frequency band and the second frequency band, as well as the noise, interference and bandwidth usage levels that may be caused based on the selection of certain channels by the computing device **312** in view of selections and communications occurring with respect to the other computing devices **312-320.**

**FIG. 5** is a flowchart illustrating an example method **500** for selecting channels in a first frequency band and a second frequency band. The method **500** may be completed by the network device **102** (e.g., an access point) or another computing device. For example, the first frequency band and the second frequency band may be different. For example, the first frequency band may be a five gigahertz (GHz) wireless communications band and the second frequency band may be a six GHz wireless communications band. For example, the first frequency band may be a wireless communications frequency band other than the five GHz band and the second frequency band may be a wireless communications frequency band other than the six GHz frequency band.

At **510,** one or more beacon signals may be sent or otherwise transmitted. For example, the beacon signals may be sent by the network device **102.** The beacon signals may comprise a beacon frame. The beacon signals may advertise the availability of the network device **102** to one or more wireless communication devices, such as the devices **104-114.** For example, each beacon signal may comprise an identifier of the network device **102,** a service-set ID (SSID), a basic service-set identifier (BSSID), security capabilities (e.g., open, WEP, WPA, WPA2), the channel width (e.g., 20, 40, 80, 160), connection speed, the beacon interval, and a channel of the frequency band the network device **102** is communicating on. For example, a first beacon signal may be sent by the network device **102** advertising the first channel of the first frequency band that the network device **102** is communicating on and a second beacon signal may be sent by the network device **102** advertising the first channel of the second frequency band that the network device **102** is communicating on. The beacon signal may be received by one or more wireless communication devices, such as one or more of the devices **104-114.**

At **520,** a request for a device to connect to the network device may be received. For example, the request may be received by the network device **102.** The request may be sent by one of the devices **104-114.** For example, the request may comprise a probe request, an authentication request, or an association request. For example, the request may be sent by one of the devices **104-114** using one of the first communication channel of the first frequency band or the first communication channel of the second frequency band. For example, the request may be sent in response to one of the devices **104-114** receiving the beacon signal from the network device **102.** For example, each of the devices **104-114** may send their own request to connect to the network device **102** at different times and potentially over an extended period of time.

At **530,** the network device **102** may connect to one or more of the devices **104-114.** For example, the network device **102** may connect to each of the devices **104-114** over a period of time. The network device **102** may connect to the devices **104-114** for wireless communication. For example, the one or more of the devices **104-114** may connect to the network device **102** using the first communication channel of the first frequency band and one or more of the devices **104-114** may connect to the network device using the first communication channel of the second frequency band. For example, one or more of the devices **104-114** may connect to the network device **102** using both the first communication channel of the first frequency band and the first communication channel of the second frequency band.

At **540,** the network device **102** may determine to select a different channel on one or both of the first frequency band or the second frequency band for communicating with the wireless communication devices, such as the devices **104-114.** For example, the network device **102** may determine to select a different channel based on bandwidth usage of the first channel, interference occurring on the first channel, a signal-to-noise ratio (e.g., the ratio satisfying a threshold), a determination that another network device (e.g., another access point) is also communicating on the first channel, or other network quality issues. For example, the network device **102** may determine to select a second channel of the first frequency band and a second channel of the second frequency band. The network device **102** may send a signal to the devices **104-114** connected to the network device **102** to inform the devices **104-114** of the channel change in one or more of the first frequency band or the second frequency band. For example, the network device **102** may determine to send the signal to inform the devices **104-114** of the channel change based on the determination to select a different channel.

At **550,** at least one request for frequency separation between the channel of the first frequency band and the channel of the second frequency band to be selected may be received. For example, the request may be received by the network device **102** from one or more of the devices **104-114.** For example, multiple requests for frequency separation may be received by the network device **102** from a plurality of the devices **104-114.** For example, the at least one request for frequency separation may be received based on the devices **104-114** receiving the signal informing the devices **104-114** of the channel change. For example, the device **104** may request a frequency separation between the channel of the first frequency band and the channel of the second frequency band of 80 megahertz (MHz), the device **106** may request a frequency separation between the channel of the first frequency band and the channel of the second frequency band of 160 MHz, the device **108** may request a frequency separation between the channel of the first frequency band and the channel of the second frequency band of 480 MHz, the device **110** may request a frequency separation between the channel of the first frequency band and the channel of the second frequency band of 400 MHz, the device **112** may request a frequency separation between the channel of the first frequency band and the channel of the second frequency band of 160 MHz, and the device **114** may request a frequency separation between the channel of the first frequency band and the channel of the second frequency band of 160 MHz. For example, some devices **104-114** may not request frequency separation in some instances.

At **560,** the network device **102** may select the lowest frequency channel available in the first frequency band. The network device **102** may select the lowest frequency channel available in the first frequency based on receiving the at least one request for frequency separation. For example, the first frequency band may cover communication frequencies that are less than the communication frequencies of the second communication band. For example, the lowest frequency channel available in the first frequency band may be the lowest frequency channel of the first frequency band. For example the lowest frequency channel available in the first frequency band may be a channel with a frequency greater than the lowest frequency channel of the first communication band. For example, the network device **102** may determine if a channel is available to be selected based on the channel satisfying one or more thresholds associated with bandwidth availability, signal-to-noise ratio (SNR), interference, number of devices communicating on the channel or the like. For example, the network device **102** may select the lowest frequency channel for the first frequency band without evaluating the bandwidth availability, SNR, interference, and/or number of devices communicating on the channel.

At **570,** the network device **102** may select the highest frequency channel available in the second frequency band. The network device **102** may select the highest frequency channel available in the second frequency based on receiving the at least one request for frequency separation. For example, the second frequency band may cover communication frequencies that are greater than the communication frequencies of the first communication band. For example, the highest frequency channel available in the second frequency band may be the highest frequency channel of the second frequency band. For example the highest frequency channel available in the second frequency band may be a channel with a frequency less than the highest frequency channel of the second communication band. For example, the network device **102** may determine if a channel is available to be selected based on the channel satisfying one or more thresholds associated with bandwidth availability, signal-to-noise ratio (SNR), interference, number of devices communicating on the channel or the like. For example, the network device **102** may select the highest frequency channel for the second frequency band without evaluating the bandwidth availability, SNR, interference, and/or number of devices communicating on the channel. The network device **102** may send a signal to the devices **104-114** indicating a change of channels to the lowest frequency channel available (e.g., a second channel) on the first frequency band and the highest frequency channel available (e.g., a second channel) on the second frequency band. The network device **102** may then switch communications with the devices **104-114** from the first channel to the second channel of the first frequency band and from the first channel to the second channel of the second frequency band.

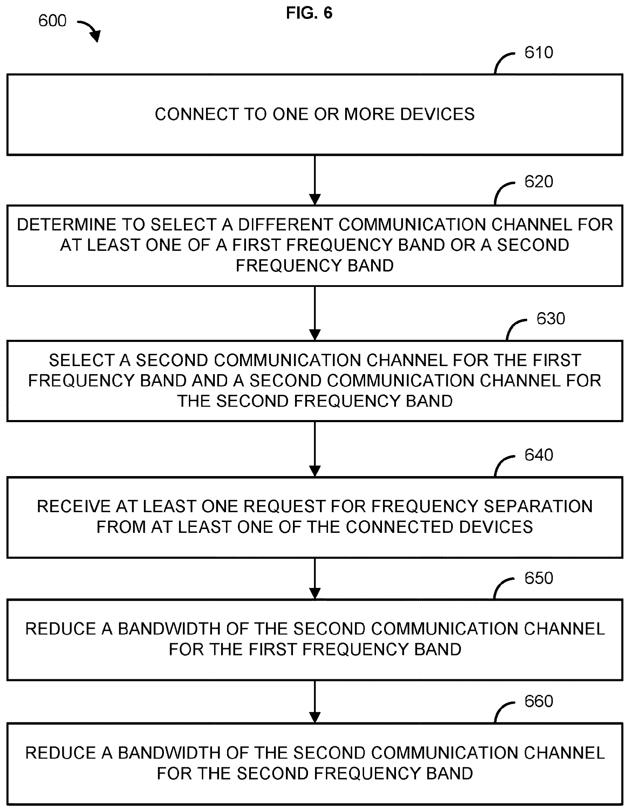

**FIG. 6** is a flowchart illustrating an example method **600** for selecting channels in a first frequency band and a second frequency band. The method **600** may be completed by the network device **102** (e.g., an access point) or another computing device. For example, the first frequency band and the second frequency band may be different. For example, the first frequency band may be a five gigahertz (GHz) wireless communications band and the second frequency band may be a six GHz wireless communications band. For example, the first frequency band may be a wireless communications frequency band other than the five GHz band and the second frequency band may be a wireless communications frequency band other than the six GHz frequency band.

To initiate communication with one or more of the devices **104-114,** the network device **102** may send or otherwise transmit one or more beacon signals. The beacon signals may comprise a beacon frame. For example, each beacon signal may comprise an identifier of the network device **102,** a service-set ID (SSID), a basic service-set identifier (BSSID), security capabilities (e.g., open, WEP, WPA, WPA2), the channel width (e.g., 20, 40, 80, 160), connection speed, the beacon interval, and a channel of the frequency band the network device **102** is communicating on. For example, a first beacon signal may be sent by the network device **102** advertising the first channel of the first frequency band that the network device **102** is communicating on and a second beacon signal may be sent by the network device **102** advertising the first channel of the second frequency band that the network device **102** is communicating on. The beacon signal may be received by one or more wireless communication devices, such as one or more of the devices **104-114.**

A request for a device to connect to the network device **102** may be received by the network device **102.** The request may be sent by one of the devices **104-114.** For example, the request may comprise a probe request, an authentication request, or an association request. For example, the request may be sent by one of the devices **104-114** using one of the first communication channel of the first frequency band or the first communication channel of the second frequency band. For example, the request may be sent in response to one of the devices **104-114** receiving the beacon signal from the network device **102.** For example, each of the devices **104-114** may send their own request to connect to the network device **102** at different times and potentially over an extended period of time.

At **610,** the network device **102** may connect to one or more of the devices **104-114.** For example, the network device **102** may connect to each of the devices **104-114** over a period of time. The network device **102** may connect to the devices **104-114** for wireless communication. For example, the one or more of the devices **104-114** may connect to the network device **102** using the first communication channel of the first frequency band and one or more of the devices **104-114** may connect to the network device **102** using the first communication channel of the second frequency band. For example, one or more of the devices **104-114** may connect to the network device **102** using both the first communication channel of the first frequency band and the first communication channel of the second frequency band.

At **620,** the network device **102** may determine to select a different channel on one or both of the first frequency band or the second frequency band for communicating with the wireless communication devices, such as the devices **104-114.** For example, the network device **102** may determine to select a different channel based on bandwidth usage of the first channel, interference occurring on the first channel, a signal-to-noise ratio (e.g., the ratio satisfying a threshold), a determination that another network device (e.g., another access point) is also communicating on the first channel, or other network quality issues. For example, the network device **102** may determine to select a second channel of the first frequency band and a second channel of the second frequency band.

At **630,** the network device **102** may select a second communication channel for the first frequency band and/or a second communication channel for the second frequency band. For example, the second communication channel of the first frequency band may be the same as the first communication channel of the first frequency band or the second communication channel of the second frequency band may be the same as the first communication channel of the second frequency band. The network device **102** may send a signal to the devices **104-114** connected to the network device **102** to inform the devices **104-114** of the channel change in one or more of the first frequency band or the second frequency band. For example, the network device **102** may send the signal to inform the devices **104-114** of the channel change based on the determination to select a different channel.

At **640,** at least one request for frequency separation between the channel of the first frequency band and the channel of the second frequency band to be selected may be received. For example, the request may be received by the network device **102** from one or more of the devices **104-114.** For example, multiple requests for frequency separation may be received by the network device **102** from a plurality of the devices **104-114.** For example, the at least one request for frequency separation may be received based on the devices **104-114** receiving the signal informing the devices **104-114** of the channel change. For example, the device **104** may request a frequency separation between the channel of the first frequency band and the channel of the second frequency band of 80 megahertz (MHz), the device **106** may request a frequency separation between the channel of the first frequency band and the channel of the second frequency band of 160 MHz, the device **108** may request a frequency separation between the channel of the first frequency band and the channel of the second frequency band of 480 MHz, the device **110** may request a frequency separation between the channel of the first frequency band and the channel of the second frequency band of 400 MHz, the device **112** may request a frequency separation between the channel of the first frequency band and the channel of the second frequency band of 160 MHz, and the device **114** may request a frequency separation between the channel of the first frequency band and the channel of the second frequency band of 160 MHz. For example, some devices **104-114** may not request frequency separation in some instances.

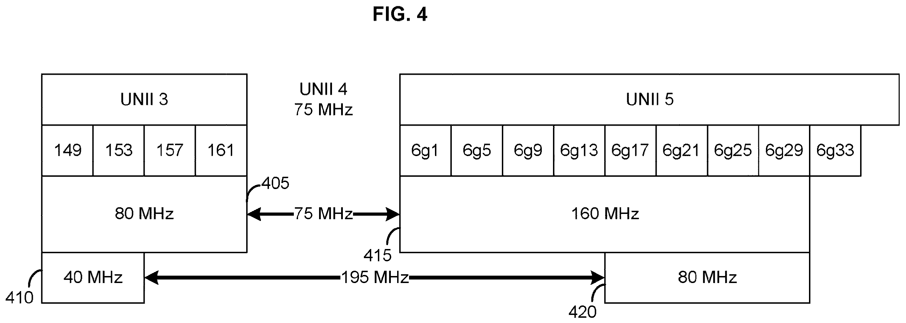

At **650,** the bandwidth of the second communication channel of the first frequency band may be reduced. For example, the bandwidth may be reduced by the network device **102.** For example, as shown in **FIG. 4****,** the initial bandwidth **405** for the second communication channel of the first frequency band may be 80 MHz. The network device **102** may determine a reduced bandwidth **410** for the second communication channel based on receiving the at least one request for frequency separation between the communication channels of the first frequency band and the second frequency band. For example, the reduced bandwidth **410** for the second communication channel may be 40 MHz. For example, the reduced bandwidth **410** may be lesser or greater than 40 MHz in certain examples. For example, the reduced bandwidth could be 20 MHz or any other amount of reduction in the bandwidth for the second channel of the first frequency band. For example, the network device **102** may reduce the bandwidth by not using the frequencies of a portion of the initial bandwidth **405** that are closest to the frequencies of the first frequency band (e.g., the highest frequencies of the initial bandwidth **405).**

At **660,** the bandwidth of the second communication channel of the second frequency band may be reduced. For example, the bandwidth may be reduced by the network device **102.** For example, as shown in **FIG. 4****,** the initial bandwidth **415** for the second communication channel of the second frequency band may be 160 MHz. The network device **102** may determine a reduced bandwidth **420** for the second communication channel based on receiving the at least one request for frequency separation between the communication channels of the first frequency band and the second frequency band. For example, the reduced bandwidth **420** for the second communication channel for the second frequency band may be 80 MHz. For example, the reduced bandwidth **420** may be lesser or greater than 80 MHz in certain examples. For example, the reduced bandwidth could be 20 MHz, 40 MHz or any other amount of reduction in the bandwidth for the second channel of the second frequency band. For example, the network device **102** may reduce the bandwidth by not using the frequencies of a portion of the initial bandwidth **415** that are closest to the frequencies of the first frequency band (e.g., the lowest frequencies of the initial bandwidth **415).** For example, as shown in **FIG. 4** the frequency separation between the second communication channel of the first frequency band and the second communication channel of the second frequency band may be increased from 75 MHz to 195 MHz by reducing the bandwidth of each of the second communication channel of the first frequency band and the second communication channel of the second frequency band.

The network device **102** may send a signal to the devices **104-114** indicating a change of channels to the lowest frequency channel available (e.g., a second channel) on the first frequency band and the highest frequency channel available (e.g., a second channel) on the second frequency band. The network device **102** may then switch communications with the devices **104-114** from the first channel to the second channel of the first frequency band and from the first channel to the second channel of the second frequency band.

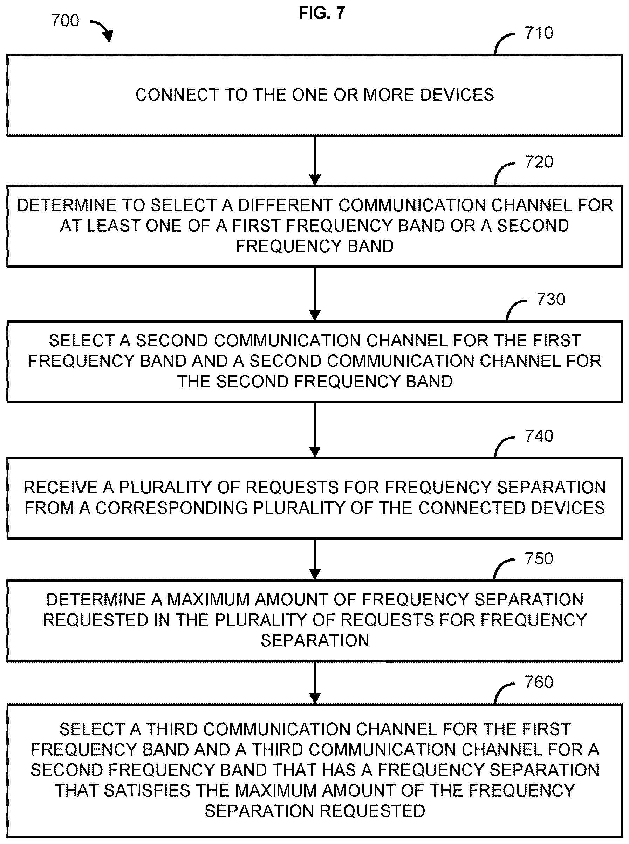

**FIG. 7** is a flowchart illustrating an example method **700** for selecting channels in a first frequency band and a second frequency band. The method **700** may be completed by the network device **102** (e.g., an access point) or another computing device. For example, the first frequency band and the second frequency band may be different. For example, the first frequency band may be a five gigahertz (GHz) wireless communications band and the second frequency band may be a six GHz wireless communications band. For example, the first frequency band may be a wireless communications frequency band other than the five GHz band and the second frequency band may be a wireless communications frequency band other than the six GHz frequency band.

To initiate communication with one or more of the devices **104-114,** the network device **102** may send or otherwise transmit one or more beacon signals. The beacon signals may comprise a beacon frame. For example, each beacon signal may comprise an identifier of the network device **102,** a service-set ID (SSID), a basic service-set identifier (BSSID), security capabilities (e.g., open, WEP, WPA, WPA2), the channel width (e.g., 20, 40, 80, 160), connection speed, the beacon interval, and a channel of the frequency band the network device **102** is communicating on. For example, a first beacon signal may be sent by the network device **102** advertising the first channel of the first frequency band that the network device **102** is communicating on and a second beacon signal may be sent by the network device **102** advertising the first channel of the second frequency band that the network device **102** is communicating on. The beacon signal may be received by one or more wireless communication devices, such as one or more of the devices **104-114.**

A request for a device to connect to the network device **102** may be received by the network device **102.** The request may be sent by one of the devices **104-114.** For example, the request may comprise a probe request, an authentication request, or an association request. For example, the request may be sent by one of the devices **104-114** using one of the first communication channel of the first frequency band or the first communication channel of the second frequency band. For example, the request may be sent in response to one of the devices **104-114** receiving the beacon signal from the network device **102.** For example, each of the devices **104-114** may send their own request to connect to the network device **102** at different times and potentially over an extended period of time.

At **710,** the network device **102** may connect to one or more of the devices **104-114.** For example, the network device **102** may connect to each of the devices **104-114** over a period of time. The network device **102** may connect to the devices **104-114** for wireless communication. For example, the one or more of the devices **104-114** may connect to the network device **102** using the first communication channel of the first frequency band and one or more of the devices **104-114** may connect to the network device **102** using the first communication channel of the second frequency band. For example, one or more of the devices **104-114** may connect to the network device **102** using both the first communication channel of the first frequency band and the first communication channel of the second frequency band.

At **720,** the network device **102** may determine to select a different channel on one or both of the first frequency band or the second frequency band for communicating with the wireless communication devices, such as the devices **104-114.** For example, the network device **102** may determine to select a different channel based on bandwidth usage of the first channel, interference occurring on the first channel, a signal-to-noise ratio (e.g., the ratio satisfying a threshold), a determination that another network device (e.g., another access point) is also communicating on the first channel, or other network quality issues. For example, the network device **102** may determine to select a second channel of the first frequency band and a second channel of the second frequency band.

At **730,** the network device **102** may select a second communication channel for the first frequency band and/or a second communication channel for the second frequency band. For example, the second communication channel of the first frequency band may be the same as the first communication channel of the first frequency band or the second communication channel of the second frequency band may be the same as the first communication channel of the second frequency band. The network device **102** may send a signal to the devices **104-114** connected to the network device **102** to inform the devices **104-114** of the channel change in one or more of the first frequency band or the second frequency band. For example, the network device **102** may send the signal to inform the devices **104-114** of the channel change based on the determination to select a different channel.

At **740,** a plurality of requests for frequency separation, between the channel of the first frequency band and the channel of the second frequency band to be selected, may be received. For example, the request may be received by the network device **102** from a plurality of the devices **104-114.** For example, the plurality of requests for frequency separation may be received based on the devices **104-114** receiving the signal informing the devices **104-114** of the channel change. For example, the device **104** may request a frequency separation between the channel of the first frequency band and the channel of the second frequency band of 80 megahertz (MHz), the device **106** may request a frequency separation between the channel of the first frequency band and the channel of the second frequency band of 160 MHz, the device **108** may request a frequency separation between the channel of the first frequency band and the channel of the second frequency band of 480 MHz, the device **110** may request a frequency separation between the channel of the first frequency band and the channel of the second frequency band of 400 MHz, the device **112** may request a frequency separation between the channel of the first frequency band and the channel of the second frequency band of 160 MHz, and the device **114** may request a frequency separation between the channel of the first frequency band and the channel of the second frequency band of 160 MHz. For example, some devices **104-114** may not request frequency separation in some instances.

At **750,** a maximum amount of frequency separation requested may be determined. For example, the network device **102** may determine the maximum amount of frequency separation requested in the plurality of the requests for frequency separation. For example, determining the maximum amount of frequency separation requested may be based on receiving the plurality of requests for frequency separation. Using the examples of the frequency separation by the devices **104-114** above, the maximum amount of frequency separation requested would be determined to be 480 MHz as requested by the device **108.**

At **760,** the network device **102** may select a third communication channel for the first frequency band and a third communication channel for the second frequency band that are separated by an amount of megahertz that satisfies the maximum amount of frequency separation requested. For example, the third communication channel for the first frequency band and the third communication channel for the second frequency band may be selected based on the maximum amount of the frequency separation requested by the devices **104-114.** For example, the amount of megahertz between the highest frequency of the third communication channel of the first frequency band and the lowest frequency of the third communication channel of the second frequency band may satisfy (e.g., be greater than or greater than or equal to) the maximum amount of frequency separation requested. For example, the network device **102** may determine if a channel is available to be selected based on the channel satisfying one or more thresholds associated with bandwidth availability, signal-to-noise ratio (SNR), interference, number of devices communicating on the channel or the like.

The network device **102** may send a signal to the devices **104-114** indicating a change of channels to the third communication channel on the first frequency band and the third communication channel on the second frequency band. The network device **102** may then switch communications with the devices **104-114** from the first channel to the third channel of the first frequency band and from the first channel to the third channel of the second frequency band.

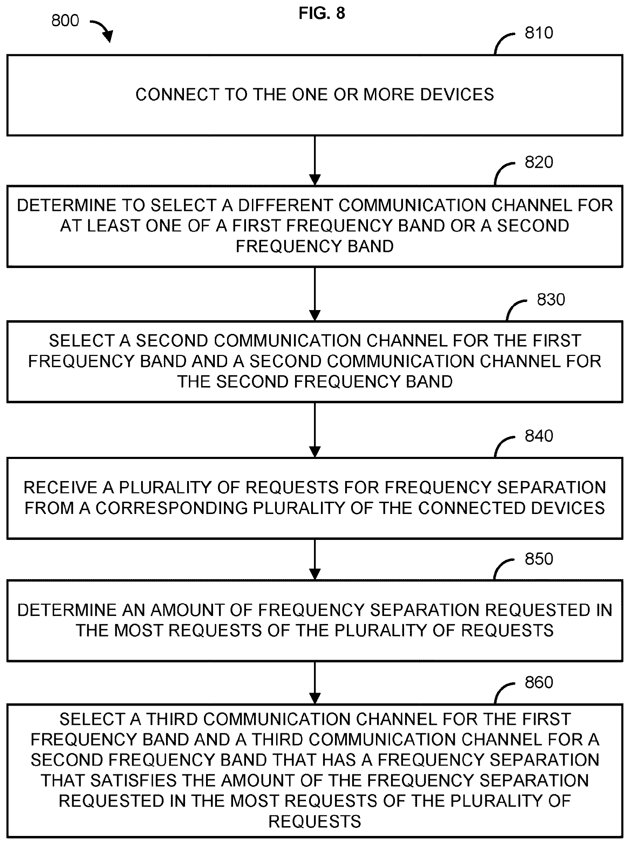

**FIG. 8** is a flowchart illustrating an example method **800** for selecting channels in a first frequency band and a second frequency band. The method **800** may be completed by the network device **102** (e.g., an access point) or another computing device. For example, the first frequency band and the second frequency band may be different. For example, the first frequency band may be a five gigahertz (GHz) wireless communications band and the second frequency band may be a six GHz wireless communications band. For example, the first frequency band may be a wireless communications frequency band other than the five GHz band and the second frequency band may be a wireless communications frequency band other than the six GHz frequency band.

To initiate communication with one or more of the devices **104-114,** the network device **102** may send or otherwise transmit one or more beacon signals. The beacon signals may comprise a beacon frame. For example, each beacon signal may comprise an identifier of the network device **102,** a service-set ID (SSID), a basic service-set identifier (BSSID), security capabilities (e.g., open, WEP, WPA, WPA2), the channel width (e.g., 20, 40, 80, 160), connection speed, the beacon interval, and a channel of the frequency band the network device **102** is communicating on. For example, a first beacon signal may be sent by the network device **102** advertising the first channel of the first frequency band that the network device **102** is communicating on and a second beacon signal may be sent by the network device **102** advertising the first channel of the second frequency band that the network device **102** is communicating on. The beacon signal may be received by one or more wireless communication devices, such as one or more of the devices **104-114.**

A request for a device to connect to the network device **102** may be received by the network device 102. The request may be sent by one of the devices **104-114.** For example, the request may comprise a probe request, an authentication request, or an association request. For example, the request may be sent by one of the devices **104-114** using one of the first communication channel of the first frequency band or the first communication channel of the second frequency band. For example, the request may be sent in response to one of the devices **104-114** receiving the beacon signal from the network device **102.** For example, each of the devices **104-114** may send their own request to connect to the network device **102** at different times and potentially over an extended period of time.

At **810,** the network device **102** may connect to one or more of the devices **104-114.** For example, the network device **102** may connect to each of the devices **104-114** over a period of time. The network device **102** may connect to the devices **104-114** for wireless communication. For example, the one or more of the devices **104-114** may connect to the network device **102** using the first communication channel of the first frequency band and one or more of the devices **104-114** may connect to the network device **102** using the first communication channel of the second frequency band. For example, one or more of the devices **104-114** may connect to the network device **102** using both the first communication channel of the first frequency band and the first communication channel of the second frequency band.

At **820,** the network device **102** may determine to select a different channel on one or both of the first frequency band or the second frequency band for communicating with the wireless communication devices, such as the devices **104-114.** For example, the network device **102** may determine to select a different channel based on bandwidth usage of the first channel, interference occurring on the first channel, a signal-to-noise ratio (e.g., the ratio satisfying a threshold), a determination that another network device (e.g., another access point) is also communicating on the first channel, or other network quality issues. For example, the network device **102** may determine to select a second channel of the first frequency band and a second channel of the second frequency band.

At **830,** the network device **102** may select a second communication channel for the first frequency band and/or a second communication channel for the second frequency band. For example, the second communication channel of the first frequency band may be the same as the first communication channel of the first frequency band or the second communication channel of the second frequency band may be the same as the first communication channel of the second frequency band. The network device **102** may send a signal to the devices **104-114** connected to the network device **102** to inform the devices **104-114** of the channel change in one or more of the first frequency band or the second frequency band. For example, the network device **102** may send the signal to inform the devices **104-114** of the channel change based on the determination to select a different channel.

At **840,** a plurality of requests for frequency separation, between the channel of the first frequency band and the channel of the second frequency band to be selected, may be received. For example, the request may be received by the network device **102** from a plurality of the devices **104-114.** For example, the plurality of requests for frequency separation may be received based on the devices **104-114** receiving the signal informing the devices **104-114** of the channel change. For example, the device **104** may request a frequency separation between the channel of the first frequency band and the channel of the second frequency band of 80 megahertz (MHz), the device **106** may request a frequency separation between the channel of the first frequency band and the channel of the second frequency band of 160 MHz, the device **108** may request a frequency separation between the channel of the first frequency band and the channel of the second frequency band of 480 MHz, the device **110** may request a frequency separation between the channel of the first frequency band and the channel of the second frequency band of 400 MHz, the device **112** may request a frequency separation between the channel of the first frequency band and the channel of the second frequency band of 160 MHz, and the device **114** may request a frequency separation between the channel of the first frequency band and the channel of the second frequency band of 160 MHz. For example, some devices **104-114** may not request frequency separation in some instances.

At **850,** a determination may be made as to which amount of frequency was requested in the most frequency separation requests of the plurality of frequency separation requests. For example, the network device **102** may determine which frequency was requested in the most frequency separation requests of the plurality of frequency separation requests received by the network device 102. For example, determining which frequency was requested in the most frequency separation requests of the plurality of frequency separation requests may be based on receiving the plurality of requests for frequency separation. Using the examples of the frequency separation by the devices **104-114** above, one device **104** requests 80 MHz of frequency separation, three devices **106, 112, 114** request 160 MHz of frequency separation, one device **110** requests 400 MHz of frequency separation, and one device **108** requests 480 MHz of frequency separation. Based on those requests, the network device **102** may determine that the most requested frequency separation is 160 MHz of frequency separation because it was requested by three devices **106, 112, 114.**

At **860,** the network device **102** may select a third communication channel for the first frequency band and a third communication channel for the second frequency band that are separated by an amount of megahertz that satisfies the frequency separation requested by the most number of devices **104-114** (e.g., 160 MHz). For example, the third communication channel for the first frequency band and the third communication channel for the second frequency band may be selected based on the amount of the frequency separation requested by the most number of devices **104-114.** For example, the amount of megahertz between the highest frequency of the third communication channel of the first frequency band and the lowest frequency of the third communication channel of the second frequency band may satisfy (e.g., be greater than or greater than or equal to) the amount of frequency separation requested by the most number of devices **104-114** (e.g., 160 MHz). For example, the network device **102** may determine if a channel is available to be selected based on the channel satisfying one or more thresholds associated with bandwidth availability, signal-to-noise ratio (SNR), interference, number of devices communicating on the channel or the like.

The network device **102** may send a signal to the devices **104-114** indicating a change of channels to the third communication channel on the first frequency band and the third communication channel on the second frequency band. The network device **102** may then switch communications with the devices **104-114** from the first communication channel to the third communication channel of the first frequency band and from the first communication channel to the third communication channel of the second frequency band.

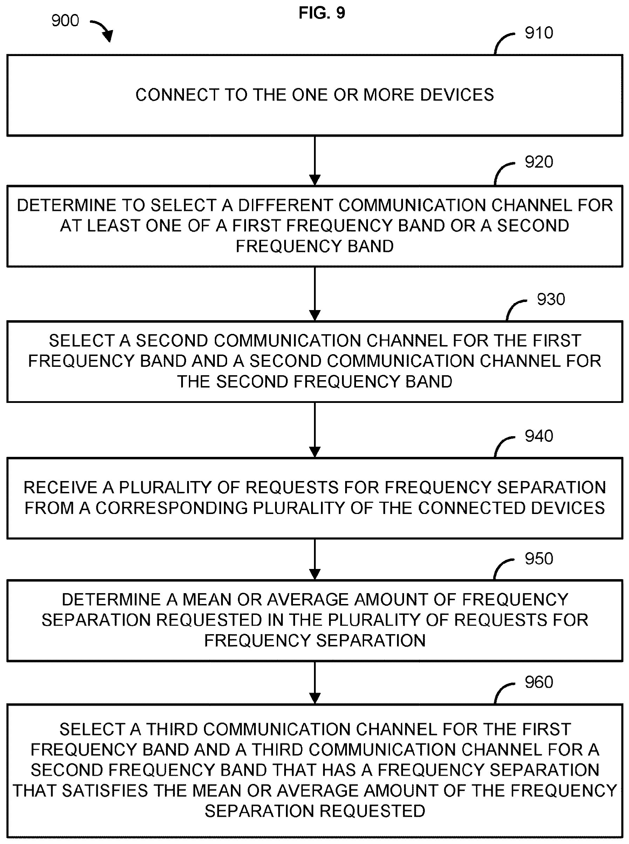

**FIG. 9** is a flowchart illustrating an example method **900** for selecting channels in a first frequency band and a second frequency band. The method **900** may be completed by the network device **102** (e.g., an access point) or another computing device. For example, the first frequency band and the second frequency band may be different. For example, the first frequency band may be a five gigahertz (GHz) wireless communications band and the second frequency band may be a six GHz wireless communications band. For example, the first frequency band may be a wireless communications frequency band other than the five GHz band and the second frequency band may be a wireless communications frequency band other than the six GHz frequency band.

To initiate communication with one or more of the devices **104-114,** the network device **102** may send or otherwise transmit one or more beacon signals. The beacon signals may comprise a beacon frame. For example, each beacon signal may comprise an identifier of the network device **102,** a service-set ID (SSID), a basic service-set identifier (BSSID), security capabilities (e.g., open, WEP, WPA, WPA2), the channel width (e.g., 20, 40, 80, 160), connection speed, the beacon interval, and a channel of the frequency band the network device **102** is communicating on. For example, a first beacon signal may be sent by the network device **102** advertising the first channel of the first frequency band that the network device **102** is communicating on and a second beacon signal may be sent by the network device **102** advertising the first channel of the second frequency band that the network device **102** is communicating on. The beacon signal may be received by one or more wireless communication devices, such as one or more of the devices **104-114.**

A request for a device to connect to the network device **102** may be received by the network device 102. The request may be sent by one of the devices **104-114.** For example, the request may comprise a probe request, an authentication request, or an association request. For example, the request may be sent by one of the devices **104-114** using one of the first communication channel of the first frequency band or the first communication channel of the second frequency band. For example, the request may be sent in response to one of the devices **104-114** receiving the beacon signal from the network device **102.** For example, each of the devices **104-114** may send their own request to connect to the network device **102** at different times and potentially over an extended period of time.

At **910,** the network device **102** may connect to one or more of the devices **104-114.** For example, the network device **102** may connect to each of the devices **104-114** over a period of time. The network device 102 may connect to the devices **104-114** for wireless communication. For example, the one or more of the devices **104-114** may connect to the network device **102** using the first communication channel of the first frequency band and one or more of the devices **104-114** may connect to the network device **102** using the first communication channel of the second frequency band. For example, one or more of the devices **104-114** may connect to the network device **102** using both the first communication channel of the first frequency band and the first communication channel of the second frequency band.

At **920,** the network device **102** may determine to select a different channel on one or both of the first frequency band or the second frequency band for communicating with the wireless communication devices, such as the devices **104-114.** For example, the network device **102** may determine to select a different channel based on bandwidth usage of the first channel, interference occurring on the first channel, a signal-to-noise ratio (e.g., the ratio satisfying a threshold), a determination that another network device (e.g., another access point) is also communicating on the first channel, or other network quality issues. For example, the network device **102** may determine to select a second channel of the first frequency band and a second channel of the second frequency band.

At **930,** the network device **102** may select a second communication channel for the first frequency band and/or a second communication channel for the second frequency band. For example, the second communication channel of the first frequency band may be the same as the first communication channel of the first frequency band or the second communication channel of the second frequency band may be the same as the first communication channel of the second frequency band. The network device **102** may send a signal to the devices **104-114** connected to the network device **102** to inform the devices **104-114** of the channel change in one or more of the first frequency band or the second frequency band. For example, the network device **102** may send the signal to inform the devices **104-114** of the channel change based on the determination to select a different channel.

At **940,** a plurality of requests for frequency separation, between the channel of the first frequency band and the channel of the second frequency band to be selected, may be received. For example, the request may be received by the network device **102** from a plurality of the devices **104-114.** For example, the plurality of requests for frequency separation may be received based on the devices **104-114** receiving the signal informing the devices **104-114** of the channel change. For example, the device **104** may request a frequency separation between the channel of the first frequency band and the channel of the second frequency band of 80 megahertz (MHz), the device **106** may request a frequency separation between the channel of the first frequency band and the channel of the second frequency band of 160 MHz, the device **108** may request a frequency separation between the channel of the first frequency band and the channel of the second frequency band of 480 MHz, the device **110** may request a frequency separation between the channel of the first frequency band and the channel of the second frequency band of 400 MHz, the device **112** may request a frequency separation between the channel of the first frequency band and the channel of the second frequency band of 160 MHz, and the device **114** may request a frequency separation between the channel of the first frequency band and the channel of the second frequency band of 160 MHz. For example, some devices **104-114** may not request frequency separation in some instances.

At **950,** a determination may be made of the average or mean frequency separation requested in the plurality of request for frequency separation. For example, the network device **102** may determine the average or mean frequency separation requested in the plurality of request for frequency separation received by the network device **102.** For example, determining the average or mean frequency separation requested in the plurality of request for frequency separation may be based on receiving the plurality of requests for frequency separation. Using the examples of the frequency separation requested by the devices **104-114** above, the network device **102** may determine that the mean or average frequency separation requested is 240 MHz of frequency separation.

At **960,** the network device **102** may select a third communication channel for the first frequency band and a third communication channel for the second frequency band that are separated by an amount of megahertz that satisfies the mean or average frequency separation requested in the plurality of requests for frequency separation from the devices **104-114** (e.g., 240 MHz). For example, the third communication channel for the first frequency band and the third communication channel for the second frequency band may be selected based on the amount of the mean or average frequency separation requested by the devices **104-114.** For example, the amount of megahertz between the highest frequency of the third communication channel of the first frequency band and the lowest frequency of the third communication channel of the second frequency band may satisfy (e.g., be greater than or greater than or equal to) the mean or average amount of frequency separation requested by the devices **104-114** (e.g., 240 MHz). For example, the network device **102** may determine if a channel is available to be selected based on the channel satisfying one or more thresholds associated with bandwidth availability, signal-to-noise ratio (SNR), interference, number of devices communicating on the channel or the like.

The network device **102** may send a signal to the devices **104-114** indicating a change of channels to the third communication channel on the first frequency band and the third communication channel on the second frequency band. The network device **102** may then switch communications with the devices **104-114** from the first communication channel to the third communication channel of the first frequency band and from the first communication channel to the third communication channel of the second frequency band.

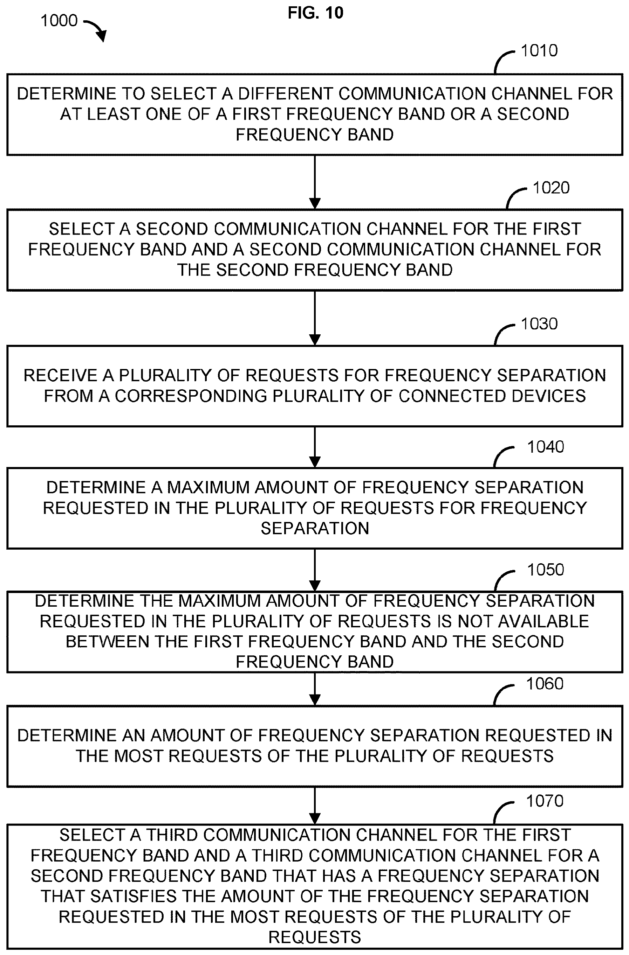

**FIG. 10** is a flowchart illustrating an example method **1000** for selecting channels in a first frequency band and a second frequency band. The method **1000** may be completed by the network device '**102** (e.g., an access point) or another computing device. For example, the first frequency band and the second frequency band may be different. For example, the first frequency band may be a five gigahertz (GHz) wireless communications band and the second frequency band may be a six GHz wireless communications band. For example, the first frequency band may be a wireless communications frequency band other than the five GHz band and the second frequency band may be a wireless communications frequency band other than the six GHz frequency band.

To initiate communication with one or more of the devices **104-114,** the network device **102** may send or otherwise transmit one or more beacon signals. The beacon signals may comprise a beacon frame. For example, each beacon signal may comprise an identifier of the network device **102,** a service-set ID (SSID), a basic service-set identifier (BSSID), security capabilities (e.g., open, WEP, WPA, WPA2), the channel width (e.g., 20, 40, 80, 160), connection speed, the beacon interval, and a channel of the frequency band the network device **102** is communicating on. For example, a first beacon signal may be sent by the network device **102** advertising the first channel of the first frequency band that the network device **102** is communicating on and a second beacon signal may be sent by the network device **102** advertising the first channel of the second frequency band that the network device **102** is communicating on. The beacon signal may be received by one or more wireless communication devices, such as one or more of the devices **104-114.**

A request for a device to connect to the network device **102** may be received by the network device 102. The request may be sent by one of the devices **104-114.** For example, the request may comprise a probe request, an authentication request, or an association request. For example, the request may be sent by one of the devices **104-114** using one of the first communication channel of the first frequency band or the first communication channel of the second frequency band. For example, the request may be sent in response to one of the devices **104-114** receiving the beacon signal from the network device **102.** For example, each of the devices **104-114** may send their own request to connect to the network device **102** at different times and potentially over an extended period of time.

The network device **102** may connect to one or more of the devices **104-114.** For example, the network device **102** may connect to each of the devices **104-114** over a period of time. The network device **102** may connect to the devices **104-114** for wireless communication. For example, the one or more of the devices **104-114** may connect to the network device **102** using the first communication channel of the first frequency band and one or more of the devices **104-114** may connect to the network device **102** using the first communication channel of the second frequency band. For example, one or more of the devices **104-114** may connect to the network device **102** using both the first communication channel of the first frequency band and the first communication channel of the second frequency band.

At **1010,** the network device **102** may determine to select a different channel on one or both of the first frequency band or the second frequency band for communicating with the wireless communication devices, such as the devices **104-114.** For example, the network device **102** may determine to select a different channel based on bandwidth usage of the first channel, interference occurring on the first channel, a signal-to-noise ratio (e.g., the ratio satisfying a threshold), a determination that another network device (e.g., another access point) is also communicating on the first channel, or other network quality issues. For example, the network device **102** may determine to select a second channel of the first frequency band and a second channel of the second frequency band.

At **1020,** the network device **102** may select a second communication channel for the first frequency band and/or a second communication channel for the second frequency band. For example, the second communication channel of the first frequency band may be the same as the first communication channel of the first frequency band or the second communication channel of the second frequency band may be the same as the first communication channel of the second frequency band. The network device **102** may send a signal to the devices **104-114** connected to the network device **102** to inform the devices **104-114** of the channel change in one or more of the first frequency band or the second frequency band. For example, the network device **102** may send the signal to inform the devices **104-114** of the channel change based on the determination to select a different channel.

At **1030,** a plurality of requests for frequency separation, between the channel of the first frequency band and the channel of the second frequency band to be selected, may be received. For example, the request may be received by the network device **102** from a plurality of the devices **104-114.** For example, the plurality of requests for frequency separation may be received based on the devices **104-114** receiving the signal informing the devices **104-114** of the channel change. For example, the device **104** may request a frequency separation between the channel of the first frequency band and the channel of the second frequency band of 80 megahertz (MHz), the device **106** may request a frequency separation between the channel of the first frequency band and the channel of the second frequency band of 160 MHz, the device **108** may request a frequency separation between the channel of the first frequency band and the channel of the second frequency band of 480 MHz, the device **110** may request a frequency separation between the channel of the first frequency band and the channel of the second frequency band of 400 MHz, the device **112** may request a frequency separation between the channel of the first frequency band and the channel of the second frequency band of 160 MHz, and the device **114** may request a frequency separation between the channel of the first frequency band and the channel of the second frequency band of 160 MHz. For example, some devices **104-114** may not request frequency separation in some instances.

At **1040,** a maximum amount of frequency separation requested may be determined. For example, the network device **102** may determine the maximum amount of frequency separation requested in the plurality of the requests for frequency separation by the devices **104-114.** For example, determining the maximum amount of frequency separation requested may be based on receiving the plurality of requests for frequency separation. Using the examples of the frequency separation by the devices **104-114** above, the maximum amount of frequency separation requested would be determined to be 480 MHz as requested by the device **108.**

At **1050,** a determination may be made that there is no combination of channels available in the first frequency band and the second frequency band that would have a frequency separation that would satisfy the maximum amount of frequency separation requested in the plurality of requests for frequency separation received from the devices **104-114.** For example, the determination may be made by the network device **102.** For example, the network device **102** may determine that there is no combination of channels available for selection by the network device in the first frequency band and the second frequency band that would have a frequency separation greater than or greater than or equal to the maximum frequency separation of 480 MHz requested by the device **108.**

At **1060,** a determination may be made as to which amount of frequency was requested in the most frequency separation requests of the plurality of frequency separation requests. For example, the network device **102** may determine which frequency was requested in the most frequency separation requests of the plurality of frequency separation requests received by the network device **102.** For example, determining which frequency was requested in the most frequency separation requests of the plurality of frequency separation requests may be based on receiving the plurality of requests for frequency separation and the determination that there were no combination of channels available for selection by the network device **102** in the first frequency band and the second frequency band that would have a frequency separation greater than or greater than or equal to the maximum frequency separation of requested in the plurality of requests for frequency separation by the devices **104-114.** Using the examples of the frequency separation by the devices **104-114** above, one device **104** requests 80 MHz of frequency separation, three devices **106, 112, 114** request 160 MHz of frequency separation, one device **110** requests 400 MHz of frequency separation, and one device **108** requests 480 MHz of frequency separation. Based on those requests, the network device **102** may determine that the most requested frequency separation is 160 MHz of frequency separation because it was requested by three devices **106, 112, 114.**

At **1070,** the network device **102** may select a third communication channel for the first frequency band and a third communication channel for the second frequency band that are separated by an amount of megahertz that satisfies the frequency separation requested by the most number of devices **104-114** (e.g., 160 MHz). For example, the third communication channel for the first frequency band and the third communication channel for the second frequency band may be selected based on the amount of the frequency separation requested by the most number of devices **104-114.** For example, the amount of megahertz between the highest frequency of the third communication channel of the first frequency band and the lowest frequency of the third communication channel of the second frequency band may satisfy (e.g., be greater than or greater than or equal to) the amount of frequency separation requested by the most number of devices **104-114** (e.g., 160 MHz). For example, the network device **102** may determine if a channel is available to be selected based on the channel satisfying one or more thresholds associated with bandwidth availability, signal-to-noise ratio (SNR), interference, number of devices communicating on the channel or the like.

The network device **102** may send a signal to the devices **104-114** indicating a change of channels to the third communication channel on the first frequency band and the third communication channel on the second frequency band. The network device **102** may then switch communications with the devices **104-114** from the first communication channel to the third communication channel of the first frequency band and from the first communication channel to the third communication channel of the second frequency band.

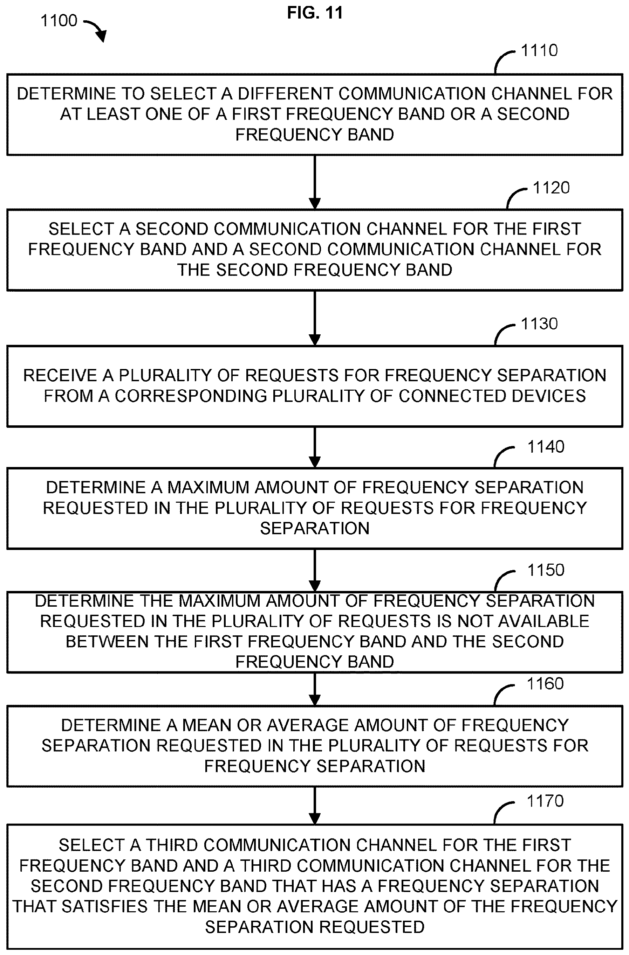

**FIG. 11** is a flowchart illustrating an example method **1100** for selecting channels in a first frequency band and a second frequency band. The method **1100** may be completed by the network device **102** (e.g., an access point) or another computing device. For example, the first frequency band and the second frequency band may be different. For example, the first frequency band may be a five gigahertz (GHz) wireless communications band and the second frequency band may be a six GHz wireless communications band. For example, the first frequency band may be a wireless communications frequency band other than the five GHz band and the second frequency band may be a wireless communications frequency band other than the six GHz frequency band.

To initiate communication with one or more of the devices **104-114,** the network device **102** may send or otherwise transmit one or more beacon signals. The beacon signals may comprise a beacon frame. For example, each beacon signal may comprise an identifier of the network device **102,** a service-set ID (SSID), a basic service-set identifier (BSSID), security capabilities (e.g., open, WEP, WPA, WPA2), the channel width (e.g., 20, 40, 80, 160), connection speed, the beacon interval, and a channel of the frequency band the network device **102** is communicating on. For example, a first beacon signal may be sent by the network device **102** advertising the first channel of the first frequency band that the network device **102** is communicating on and a second beacon signal may be sent by the network device **102** advertising the first channel of the second frequency band that the network device **102** is communicating on. The beacon signal may be received by one or more wireless communication devices, such as one or more of the devices **104-114.**

A request for a device to connect to the network device **102** may be received by the network device **102.** The request may be sent by one of the devices **104-114.** For example, the request may comprise a probe request, an authentication request, or an association request. For example, the request may be sent by one of the devices **104-114** using one of the first communication channel of the first frequency band or the first communication channel of the second frequency band. For example, the request may be sent in response to one of the devices **104-114** receiving the beacon signal from the network device **102.** For example, each of the devices **104-114** may send their own request to connect to the network device **102** at different times and potentially over an extended period of time.

The network device **102** may connect to one or more of the devices **104-114.** For example, the network device **102** may connect to each of the devices **104-114** over a period of time. The network device **102** may connect to the devices **104-114** for wireless communication. For example, the one or more of the devices **104-114** may connect to the network device **102** using the first communication channel of the first frequency band and one or more of the devices **104-114** may connect to the network device **102** using the first communication channel of the second frequency band. For example, one or more of the devices **104-114** may connect to the network device **102** using both the first communication channel of the first frequency band and the first communication channel of the second frequency band.

At **1110,** the network device **102** may determine to select a different channel on one or both of the first frequency band or the second frequency band for communicating with the wireless communication devices, such as the devices **104-114.** For example, the network device **102** may determine to select a different channel based on bandwidth usage of the first channel, interference occurring on the first channel, a signal-to-noise ratio (e.g., the ratio satisfying a threshold), a determination that another network device (e.g., another access point) is also communicating on the first channel, or other network quality issues. For example, the network device **102** may determine to select a second channel of the first frequency band and a second channel of the second frequency band.

At **1120,** the network device **102** may select a second communication channel for the first frequency band and/or a second communication channel for the second frequency band. For example, the second communication channel of the first frequency band may be the same as the first communication channel of the first frequency band or the second communication channel of the second frequency band may be the same as the first communication channel of the second frequency band. The network device **102** may send a signal to the devices **104-114** connected to the network device **102** to inform the devices **104-114** of the channel change in one or more of the first frequency band or the second frequency band. For example, the network device **102** may send the signal to inform the devices **104-114** of the channel change based on the determination to select a different channel.

At **1130,** a plurality of requests for frequency separation, between the channel of the first frequency band and the channel of the second frequency band to be selected, may be received. For example, the request may be received by the network device **102** from a plurality of the devices **104-114.** For example, the plurality of requests for frequency separation may be received based on the devices **104-114** receiving the signal informing the devices **104-114** of the channel change. For example, the device **104** may request a frequency separation between the channel of the first frequency band and the channel of the second frequency band of 80 megahertz (MHz), the device **106** may request a frequency separation between the channel of the first frequency band and the channel of the second frequency band of 160 MHz, the device **108** may request a frequency separation between the channel of the first frequency band and the channel of the second frequency band of 480 MHz, the device **110** may request a frequency separation between the channel of the first frequency band and the channel of the second frequency band of 400 MHz, the device **112** may request a frequency separation between the channel of the first frequency band and the channel of the second frequency band of 160 MHz, and the device **114** may request a frequency separation between the channel of the first frequency band and the channel of the second frequency band of 160 MHz. For example, some devices **104-114** may not request frequency separation in some instances.

At **1140,** a maximum amount of frequency separation requested may be determined. For example, the network device **102** may determine the maximum amount of frequency separation requested in the plurality of the requests for frequency separation by the devices **104-114.** For example, determining the maximum amount of frequency separation requested may be based on receiving the plurality of requests for frequency separation. Using the examples of the frequency separation by the devices **104-114** above, the maximum amount of frequency separation requested would be determined to be 480 MHz as requested by the device **108.**

At **1150,** a determination may be made that there is no combination of channels available in the first frequency band and the second frequency band that would have a frequency separation that would satisfy the maximum amount of frequency separation requested in the plurality of requests for frequency separation received from the devices **104-114.** For example, the determination may be made by the network device **102.** For example, the network device **102** may determine that there is no combination of channels available for selection by the network device in the first frequency band and the second frequency band that would have a frequency separation greater than or greater than or equal to the maximum frequency separation of 480 MHz requested by the device **108.**

At **1160,** a determination may be made of the average or mean frequency separation requested in the plurality of request for frequency separation. For example, the network device **102** may determine the average or mean frequency separation requested in the plurality of request for frequency separation received by the network device **102.** For example, determining the average or mean frequency separation requested in the plurality of request for frequency separation may be based on receiving the plurality of requests for frequency separation and the determination that there were no combination of channels available for selection by the network device **102** in the first frequency band and the second frequency band that would have a frequency separation greater than or greater than or equal to the maximum frequency separation of requested in the plurality of requests for frequency separation by the devices **104-114.** Using the examples of the frequency separation requested by the devices **104-114** above, the network device **102** may determine that the mean or average frequency separation requested is 240 MHz of frequency separation.

At **1170,** the network device **102** may select a third communication channel for the first frequency band and a third communication channel for the second frequency band that are separated by an amount of megahertz that satisfies the mean or average frequency separation requested in the plurality of requests for frequency separation from the devices **104-114** (e.g., 240 MHz). For example, the third communication channel for the first frequency band and the third communication channel for the second frequency band may be selected based on the amount of the mean or average frequency separation requested by the devices **104-114.** For example, the amount of megahertz between the highest frequency of the third communication channel of the first frequency band and the lowest frequency of the third communication channel of the second frequency band may satisfy (e.g., be greater than or greater than or equal to) the mean or average amount of frequency separation requested by the devices **104-114** (e.g., 240 MHz). For example, the network device **102** may determine if a channel is available to be selected based on the channel satisfying one or more thresholds associated with bandwidth availability, signal-to-noise ratio (SNR), interference, number of devices communicating on the channel or the like.

The network device **102** may send a signal to the devices **104-114** indicating a change of channels to the third communication channel on the first frequency band and the third communication channel on the second frequency band. The network device **102** may then switch communications with the devices **104-114** from the first communication channel to the third communication channel of the first frequency band and from the first communication channel to the third communication channel of the second frequency band.

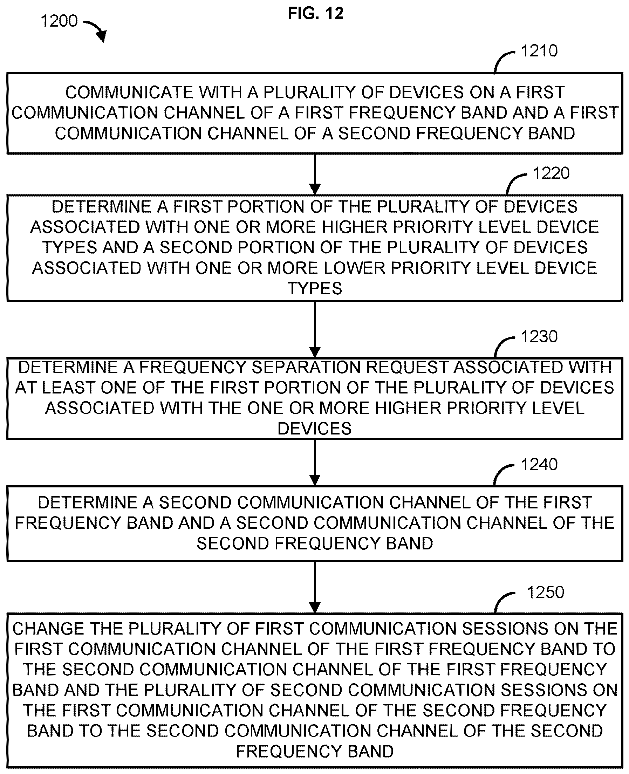

**FIG. 12** is a flowchart illustrating an example method **1200** for selecting channels in a first frequency band and a second frequency band. The method **1200** may be completed by a computing device **102** (e.g., a network device such as an access point or gateway) or another computing device. For example, the first frequency band and the second frequency band may be different. For example, the first frequency band may be a five gigahertz (GHz) wireless communications band and the second frequency band may be a six GHz wireless communications band. For example, the first frequency band may be a wireless communications frequency band other than the five GHz band and the second frequency band may be a wireless communications frequency band other than the six GHz frequency band. For example, the computing device **102** may be configured to simultaneously transmit and receive communications to and from the computing device **102.** For example, the computing device **102** may connect with and communicate with a plurality of wireless communication devices, such as devices **104-114.**

To initiate communication with one or more of the devices **104-114,** the computing device **102** may send or otherwise transmit one or more beacon signals. The beacon signals may comprise a beacon frame. For example, each beacon signal may comprise an identifier of the computing device **102,** a service-set ID (SSID), a basic service-set identifier (BSSID), security capabilities (e.g., open, WEP, WPA, WPA2), the channel width (e.g., 20, 40, 80, 160), connection speed, the beacon interval, and a channel of the frequency band the computing device **102** is communicating on. For example, a first beacon signal may be sent by the computing device **102** advertising the first channel of the first frequency band that the computing device **102** is communicating on and a second beacon signal may be sent by the computing device **102** advertising the first channel of the second frequency band that the computing device **102** is communicating on. The beacon signal may be received by one or more wireless communication devices, such as one or more of the devices **104-114.** For example, all or a portion of the devices **104-114** may be configured for multi-link operation, such that the particular device **104-114** may connect and communicate with the computing device via both the first communication channel of the first frequency band and the first communication channel of the second frequency band.

A request for a device to connect to the computing device **102** may be received by the computing device 102. The request may be sent by one of the devices **104-114.** For example, the request may comprise a probe request, an authentication request, or an association request. For example, the request may be sent by one of the devices **104-114** using one of the first communication channel of the first frequency band or the first communication channel of the second frequency band. For example, the request may be sent in response to one of the devices **104-114** receiving the beacon signal from the computing device **102.** For example, each of the devices **104-114** may send their own request to connect to the computing device **102** at different times and potentially over an extended period of time.

The computing device **102** may connect to one or more of the devices **104-114.** For example, the computing device **102** may connect to each of the devices **104-114** over a period of time. The computing device **102** may connect to the devices **104-114** for wireless communication. For example, the one or more of the devices **104-114** may connect to the computing device **102** using the first communication channel of the first frequency band and one or more of the devices **104-114** may connect to the computing device **102** using the first communication channel of the second frequency band. For example, one or more of the devices **104-114** may connect to the computing device **102** using both the first communication channel of the first frequency band and the first communication channel of the second frequency band.

At **1210,** the computing device **102** may communicate with a plurality of devices, such as the devices **104-114** using a multi-link operation via a first communication channel of a first frequency band and a first communication channel of a second frequency band. For example, the second frequency band may be made up of communication frequencies that are greater than the communications frequencies of the first frequency band.

The computing device **102** may determine to select a different channel on one or both of the first frequency band or the second frequency band for communicating with the wireless communication devices, such as the devices **104-114.** For example, the computing device **102** may determine to select a different channel based on bandwidth usage of the first channel, interference occurring on the first channel, a signal-to-noise ratio (e.g., the ratio satisfying a threshold), a determination that another network device (e.g., another access point) is also communicating on the first channel, or other network quality issues. For example, the computing device **102** may determine to select a second channel of the first frequency band and a second channel of the second frequency band. The computing device **102** may send a signal indicating an intent to select a different channel on one or both of the first frequency band or the second frequency band. For example, the signal may be received by all or a portion of the plurality of devices **104-114.**

The computing device **102** may receive from all or at least a portion of the plurality of devices **104-114** a plurality of frequency separation requests. For example, the computing device **102** may receive the frequency separation request from a device (e.g., of the plurality of devices **104-114)** when the device connects or begins a communication session with the computing device **102.** For example, the computing device **102** may receive the frequency separation request from a device (e.g., of the plurality of devices **104-114)** when the device receives an indication that the computing device **102** is going to change the communication channel on at least one of the first frequency band or the second frequency band. For example, each frequency separation request may comprise a frequency separation value. The frequency separation value may be the amount of frequency separation (in MHz) between the second communication channel of the first frequency band and the second communication channel of the second frequency band desired by the particular device **104-114** sending the frequency separation request. For example, some devices **104-114** may desire a greater frequency separation value while other devices **104-114** may request a lesser frequency separation value or may not request a frequency separation value at all. For example, the plurality of requests for frequency separation may be received based on the devices **104-114** receiving the signal informing the devices **104-114** of the channel change by the computing device **102.** For example, the device **104** may request a frequency separation between the channel of the first frequency band and the channel of the second frequency band of 80 megahertz (MHz), the device **106** may request a frequency separation between the channel of the first frequency band and the channel of the second frequency band of 160 MHz, the device **108** may request a frequency separation between the channel of the first frequency band and the channel of the second frequency band of 480 MHz, the device **110** may request a frequency separation between the channel of the first frequency band and the channel of the second frequency band of 400 MHz, the device **112** may request a frequency separation between the channel of the first frequency band and the channel of the second frequency band of 160 MHz, and the device **114** may request a frequency separation between the channel of the first frequency band and the channel of the second frequency band of 160 MHz.

At **1220,** the computing device **102** may determine a first portion of the plurality of devices **104-114** associated with one or more higher priority level device types and a second portion of the plurality of devices associated with one or more lower priority level device types. For example, the computing device **102** may make the determination based on the determined device type associated with or for each of the plurality of devices **104-114.** For example, devices associated with a first device type, a second device type, or a third device type (as discussed below) may be considered to be associated with the one or more higher priority level device types and devices associated with the fourth device type and fifth device type may be considered associated with the one or more lower priority level device types. For example, devices associated with the one or more higher priority level device types may include mesh extenders, devices subordinate to the computing device **102,** augmented reality devices, virtual reality devices, a smart phone, a tablet computer, a laptop computer, a desktop computer, or a wearable smart device (e.g., smart watch, smart glasses, etc.). For example, devices associated with the one or more lower priority level device types may include IoT devices, home appliances, and thermostats. For example, the line of distinguishing between higher priority level device types and lower priority level device types may be different in other embodiments as any portion of the device types may be considered higher level priority device types and the remainder of the device types may be considered lower level priority device types.

The computing device **102** may determine a device type associated with each of the plurality of devices **104-114.** For example, the computing device **102** may determine the device type for a device of the plurality of devices **104-114** based on fingerprinting techniques of communications from the device of the plurality of devices **104-114.** For example, the computing device **102** may determine the device type for the device based on one or more of a differentiated services code point (DSCP) host name, a DSCP parameter arrangement, a MAC address for the device of the plurality of devices **104-114,** or based on an evaluation of the types of packets and the contents of the packets received from the device of the plurality of devices **104-114.**

Each device type may have a corresponding priority level for evaluating frequency separation requests received from the device. For example, a first device type may be mesh extenders. The first device type may have the highest priority when evaluating frequency separation requests. For example, the computing device **102** may always attempt to satisfy the maximum frequency separation value requested by the devices in the first device type. For example, a second device type may include augmented reality devices and virtual reality devices. The second device type may have a lower priority than the first device type but may have the next highest priority to the first device type. For example, the computing device **102** will typically attempt to satisfy the maximum frequency separation value requested by devices in the second device type. For example, a third device type may include one or more of a smart phone, a tablet computer, a laptop computer, a desktop computer, or a wearable smart device. The third device type may have a lower priority than the first device type and the second device type, but may have the next highest priority to the second device type. For example, the computing device **102** will typically attempt to satisfy the maximum frequency separation value requested by devices in the third device type. For example, a fourth device type may include Internet-of-things (IoT) devices. The fourth device type may have a lower priority than the first device type, the second device type and the third device type, but may have the next highest priority to the third device type. For example, the computing device **102** may not determine the next communication channels of the first frequency band and the second frequency band based on frequency separation requests from devices in the fourth device type. For example, a fifth device type may include home appliance (e.g., refrigerator, dishwasher, clothes washer, dryer, etc.) and thermostat devices. The fifth device type may have a lower priority than the first device type, the second device type, the third device type and the fourth device type, but may have the next highest priority to the fourth device type. For example, the computing device **102** may not determine the next communication channels of the first frequency band and the second frequency band based on frequency separation requests from devices in the fifth device type. For example, the first device type, the second device type, and the third device type may be considered higher priority device types, while the fourth device type and the fifth device type may be considered lower priority device types.

In other examples, the line of distinction between higher priority device types and lower priority device types may be different, such as only the first device type is considered a higher priority level device type and the other device types are considered lower priority level device types (e.g., the computing device **102** may determine the next communication channels of the first and second frequency bands based on frequency separation requests from devices in the first device type and not determine the next communication channels of the first frequency band and the second frequency band based on frequency separation requests from devices in the second, third, fourth, and fifth device types); the first and second device types are considered a higher priority level device types and the remaining device types (third, fourth, and fifth) are considered lower priority level device types (e.g., the computing device **102** may determine the next communication channels of the first and second frequency bands based on frequency separation requests from devices in the first and second device types and may not determine the next communication channels of the first frequency band and the second frequency band based on frequency separation requests from devices in the third, fourth, and fifth device types); the first, second, third, and fourth device types are considered higher priority level device types and the remaining device types (e.g., fifth) are considered lower priority level device types (e.g., the computing device **102** may determine the next communication channels of the first and second frequency bands based on frequency separation requests from devices in the first, second, third and fourth device types and may not determine the next communication channels of the first frequency band and the second frequency band based on frequency separation requests from devices in the fifth device type). Furthermore, the line of distinction between higher priority level device types and lower priority level device types may be adjustable to include any of the device types in either of the higher or lower priority level groups. For example, the line of demarcation between which device types will be considered (based on their frequency separation requests) and which device types the frequency separation requests will not be considered can be positioned before or after any of the device types or priority level device types described herein, such that device types above (e.g., with a priority level higher (when first priority is considered higher than second and second is considered higher than third, etc.)) than the line of demarcation will have their frequency separation requests considered and those below (e.g., with a priority level lower) than the line of demarcation will not have their frequency requests considered in determining the next channels in the first and second frequency bands.

At **1230,** the computing device **102** may determine a frequency separation value requested that is associated with at least one of the first portion of the plurality of devices **104-114** associated with the one or more higher priority level devices. For example, the frequency separation value may be the maximum frequency separation value requested by a device included within one or more of the higher priority level devices. For example, the computing device may evaluate each frequency separation value requested by the first portion of the plurality of devices **104-114** determined to have a device type that is included in the one or more higher priority level devices.

At **1240,** the network device **102** may determine a second communication channel for the first frequency band and/or a second communication channel for the second frequency band. For example, the second communication channel for the first frequency band and the second communication channel for the second frequency band may be determined based on the frequency separation value requested for the one or more higher level priority devices. For example, the second communication channel for the first frequency band and the second communication channel for the second frequency band may be determined based on the maximum frequency separation value requested by the one or more higher level priority devices. For example, the second communication channel for the first frequency band and the second communication channel for the second frequency band may be determined so the frequency separation between the second communication channel for the first frequency band and the second communication channel for the second frequency band is greater than or equal to the maximum frequency separation value requested for the one or more higher level priority devices. For example, the frequency separation between the highest frequency of the second communication channel of the first frequency band and the lowest frequency of the second communication channel of the second frequency band is greater than or equal to the maximum frequency separation value requested for the one or more higher level priority devices. For example, the second communication channel of the first frequency band may be the same as the first communication channel of the first frequency band or the second communication channel of the second frequency band may be the same as the first communication channel of the second frequency band.

At **1250,** the computing device **102** may change the plurality of first communication sessions with at least a portion of the plurality of devices **104-114** on the first communication channel of the first frequency band to the second communication channel of the first frequency band. The computing device may change the plurality of second communication sessions with at least a portion of the plurality of devices **104-114** on the first communication channel of the second frequency band to the second communication channel of the second frequency band. For example, the second communication channel of the first frequency band may be separated from the second communication channel of the second frequency band by an amount of megahertz that satisfies the maximum frequency separation value requested for the portion of the devices **104-114** associated with the one or more higher priority level devices. For example, the computing device **102** may determine if a channel of the first frequency band or the second frequency band is available to be selected based on the channel satisfying one or more thresholds associated with bandwidth availability, signal-to-noise ratio (SNR), interference, number of devices communicating on the channel or the like.

The computing device **102** may send a signal to the devices **104-114** indicating a change of channels to the second communication channel on the first frequency band and the second communication channel on the second frequency band. The network device **102** may then switch communications with the devices **104-114** from the first communication channel to the second communication channel of the first frequency band and from the first communication channel to the second communication channel of the second frequency band.

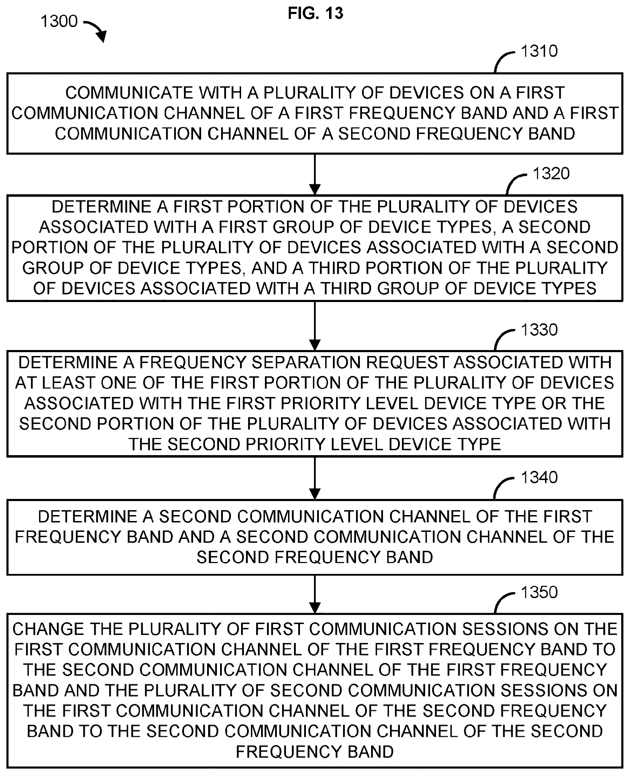

**FIG. 13** is a flowchart illustrating an example method **1300** for selecting channels in a first frequency band and a second frequency band. The method **1300** may be completed by a computing device **102** (e.g., a network device, such as an access point or gateway) or another computing device. For example, the first frequency band and the second frequency band may be different. For example, the first frequency band may be a five gigahertz (GHz) wireless communications band and the second frequency band may be a six GHz wireless communications band. For example, the first frequency band may be a wireless communications frequency band other than the five GHz band and the second frequency band may be a wireless communications frequency band other than the six GHz frequency band. For example, the computing device **102** may be configured to simultaneously transmit and receive communications to and from the computing device **102.** For example, the computing device **102** may connect with and communicate with a plurality of wireless communication devices, such as devices **104-114.**

To initiate communication with one or more of the devices **104-114,** the computing device **102** may send or otherwise transmit one or more beacon signals. The beacon signals may comprise a beacon frame. For example, each beacon signal may comprise an identifier of the computing device **102,** a service-set ID (SSID), a basic service-set identifier (BSSID), security capabilities (e.g., open, WEP, WPA, WPA2), the channel width (e.g., 20, 40, 80, 160), connection speed, the beacon interval, and a channel of the frequency band the computing device **102** is communicating on. For example, a first beacon signal may be sent by the computing device **102** advertising the first channel of the first frequency band that the computing device **102** is communicating on and a second beacon signal may be sent by the computing device **102** advertising the first channel of the second frequency band that the computing device **102** is communicating on. The beacon signal may be received by one or more wireless communication devices, such as one or more of the devices **104-114.** For example, all or a portion of the devices **104-114** may be configured for multi-link operation, such that the particular device **104-114** may connect and communicate with the computing device via both the first communication channel of the first frequency band and the first communication channel of the second frequency band.

A request for a device to connect to the computing device **102** may be received by the computing device 102. The request may be sent by one of the devices **104-114.** For example, the request may comprise a probe request, an authentication request, or an association request. For example, the request may be sent by one of the devices **104-114** using one of the first communication channel of the first frequency band or the first communication channel of the second frequency band. For example, the request may be sent in response to one of the devices **104-114** receiving the beacon signal from the computing device **102.** For example, each of the devices **104-114** may send their own request to connect to the computing device **102** at different times and potentially over an extended period of time.

The computing device **102** may connect to one or more of the devices **104-114.** For example, the computing device **102** may connect to each of the devices **104-114** over a period of time. The computing device **102** may connect to the devices **104-114** for wireless communication. For example, the one or more of the devices **104-114** may connect to the computing device **102** using the first communication channel of the first frequency band and one or more of the devices **104-114** may connect to the computing device **102** using the first communication channel of the second frequency band. For example, one or more of the devices **104-114** may connect to the computing device **102** using both the first communication channel of the first frequency band and the first communication channel of the second frequency band.

At **1310,** the computing device **102** may communicate with a plurality of devices, such as the devices **104-114,** using a multi-link operation via a first communication channel of a first frequency band and a first communication channel of a second frequency band. For example, the second frequency band may be made up of communication frequencies that are greater than the communications frequencies of the first frequency band.

The computing device **102** may determine to select a different channel on one or both of the first frequency band or the second frequency band for communicating with the wireless communication devices, such as the devices **104-114.** For example, the computing device **102** may determine to select a different channel based on bandwidth usage of the first channel, interference occurring on the first channel, a signal-to-noise ratio (e.g., the ratio satisfying a threshold), a determination that another network device (e.g., another access point) is also communicating on the first channel, or other network quality issues. For example, the computing device **102** may determine to select a second channel of the first frequency band and a second channel of the second frequency band. The computing device **102** may send a signal indicating an intent to select a different channel on one or both of the first frequency band or the second frequency band. For example, the signal may be received by all or a portion of the plurality of devices **104-114.**

The computing device **102** may receive from all or at least a portion of the plurality of devices **104-114** a plurality of frequency separation requests. For example, the computing device **102** may receive the frequency separation request from a device (e.g., of the plurality of devices **104-114)** when the device connects or begins a communication session with the computing device **102.** For example, each frequency separation request may comprise a frequency separation value. The frequency separation value may be the amount of frequency separation (in MHz) between the second communication channel of the first frequency band and the second communication channel of the second frequency band desired by the particular device **104-114** sending the frequency separation request. For example, some devices **104-114** may desire a greater frequency separation value while other devices **104-114** may request a lesser frequency separation value or may not request a frequency separation value at all. For example, the plurality of requests for frequency separation may be received based on the devices **104-114** receiving the signal informing the devices **104-114** of the channel change by the computing device **102.** For example, the device **104** may request a frequency separation between the channel of the first frequency band and the channel of the second frequency band of 80 megahertz (MHz), the device **106** may request a frequency separation between the channel of the first frequency band and the channel of the second frequency band of 160 MHz, the device **108** may request a frequency separation between the channel of the first frequency band and the channel of the second frequency band of 480 MHz, the device **110** may request a frequency separation between the channel of the first frequency band and the channel of the second frequency band of 400 MHz, the device **112** may request a frequency separation between the channel of the first frequency band and the channel of the second frequency band of 160 MHz, and the device **114** may request a frequency separation between the channel of the first frequency band and the channel of the second frequency band of 160 MHz.

At **1320,** the computing device **102** may determine a first portion of the plurality of devices **104-114** associated with a first group of device types, a second portion of the plurality of devices **104-114** associated with a second group of device types, and a third portion of the plurality of devices **104-114** associated with a third group of device types. For example, the computing device **102** may make the determination based on the determined device type associated with or for each of the plurality of devices **104-114.** For example, devices associated with the first group of device types may include mesh extenders and devices subordinate to the computing device **102.** For example, devices associated with the second group of device types may include augmented reality devices, virtual reality devices, a smart phone, a tablet computer, a laptop computer, a desktop computer, or a wearable smart device (e.g., smart watch, smart glasses, etc.). For example, devices associated with the third group of device types may include IoT devices, home appliances, and thermostats. In other examples, the devices associated with each of the first, second, and third groups of device types may be different and may include any of the devices listed above.

The computing device **102** may determine a device type associated with each of the plurality of devices **104-114.** For example, the computing device **102** may determine the device type for a device of the plurality of devices **104-114** based on fingerprinting techniques of communications from the device of the plurality of devices **104-114.** For example, the computing device **102** may determine the device type for the device based on one or more of a differentiated services code point (DSCP) host name, a DSCP parameter arrangement, a MAC address for the device of the plurality of devices **104-114,** or based on an evaluation of the types of packets and the contents of the packets received from the device of the plurality of devices **104-114.**

Each group of device types may have a corresponding priority level for evaluating frequency separation requests received from the device. For example, a first group of device types may have the highest priority when evaluating frequency separation requests. For example, the computing device **102** may always attempt to satisfy the maximum frequency separation value requested by the devices in the first group of device types. For example, the second group of device types may have a lower priority than the first group of device types but may have the next highest priority to the first group of device types. For example, the computing device **102** may typically attempt to satisfy the maximum frequency separation value requested by devices in the second group of device types. For example, a third group of device types may have a lower priority than the first group of device types and the second group of device types, but may have the next highest priority to the second group of device types. For example, the computing device **102** may not determine the next communication channels of the first frequency band and the second frequency band based on frequency separation requests from devices in the third group of device types. In this example, the first group of device types and the second group of device types may be considered higher priority device types, while the third group of device types may be considered lower priority device types. In other examples, the computing device **102** may determine the next communication channels of the first and second frequency based on frequency separation requests from devices in the first group of device types only and may not consider the requests from the devices in the second group of device types and the third group of device types. In this example, the first group of device types may be considered higher priority device types, while the second and third group of device types may be considered lower priority device types. Furthermore, the line of distinction between higher priority level device types and lower priority level device types may be adjustable to include any of the device types in either of the higher or lower priority level groups. For example, the line of demarcation between which device types will be considered (based on their frequency separation requests) and which device types the frequency separation requests will not be considered can be positioned before or after any of the device types or priority level device types described herein, such that device types above (e.g., with a priority level higher (when first priority is considered higher than second and second is considered higher than third, etc.)) than the line of demarcation will have their frequency separation requests considered and those below (e.g., with a priority level lower) than the line of demarcation will not have their frequency requests considered in determining the next channels in the first and second frequency bands.

At **1330,** the computing device **102** may determine a frequency separation value requested that is associated with at least one of the first portion of the plurality of devices **104-114** associated with the first group of device types or the second group of device types. For example, the determined frequency separation value may be the maximum or highest frequency separation value requested by any of the first portion of the plurality of devices **104-114** in the first group of the device types and the second group of device types. For example, the determined frequency separation value requested may be the most requested frequency separation value by the first portion of the plurality of devices **104-114** in the first group of the device types and the second group of device types, similar to that described in **FIG. 8****.** For example, the determined frequency separation value requested may be the mean or average of the requested frequency separation values by the first portion of the plurality of devices **104-114** in the first group of the device types and the second group of device types, similar to that described in **FIG. 9****.** For example, the computing device **102** may evaluate each frequency separation value requested by the first portion of the plurality of devices **104-114** determined to be in the first group of device types and the second group of device types. For example, frequency separation requests received from a portion of the plurality of devices **104-114** associated with the first group of device types are prioritized over frequency separation requests received from a portion of the plurality of devices **104-114** associated with the second group of device types. Further, the frequency separation requests received from the portion of the plurality of devices **104-114** associated with the second group of device types are prioritized over frequency separation requests received from a portion of the plurality of devices **104-114** associated with the third group of device types.

At **1340,** the network device **102** may determine a second communication channel for the first frequency band and/or a second communication channel for the second frequency band. For example, the second communication channel for the first frequency band and the second communication channel for the second frequency band may be determined based on the determined frequency separation value requested from the first group of device types and the second group of device types. For example, the second communication channel for the first frequency band and the second communication channel for the second frequency band may be determined so the frequency separation between the second communication channel for the first frequency band and the second communication channel for the second frequency band is greater than or equal to the determined frequency separation value requested. For example, the frequency separation between the highest frequency of the second communication channel of the first frequency band and the lowest frequency of the second communication channel of the second frequency band is greater than or equal to the determined frequency separation value requested for the one or more higher level priority devices. For example, the second communication channel of the first frequency band may be the same as the first communication channel of the first frequency band or the second communication channel of the second frequency band may be the same as the first communication channel of the second frequency band.

At **1350,** the computing device **102** may change the plurality of first communication sessions with at least a portion of the plurality of devices **104-114** on the first communication channel of the first frequency band to the second communication channel of the first frequency band. The computing device may change the plurality of second communication sessions with at least a portion of the plurality of devices **104-114** on the first communication channel of the second frequency band to the second communication channel of the second frequency band. For example, the second communication channel of the first frequency band may be separated from the second communication channel of the second frequency band by an amount of megahertz that satisfies the determined frequency separation value requested for the portion of the devices **104-114** associated with the first group of device types or the second group of device types. For example, the computing device **102** may determine if a channel of the first frequency band or the second frequency band is available to be selected based on the channel satisfying one or more thresholds associated with bandwidth availability, signal-to-noise ratio (SNR), interference, number of devices communicating on the channel or the like.

The computing device **102** may send a signal to the devices **104-114** indicating a change of channels to the second communication channel on the first frequency band and the second communication channel on the second frequency band. The network device **102** may then switch communications with the devices **104-114** from the first communication channel to the second communication channel of the first frequency band and from the first communication channel to the second communication channel of the second frequency band.

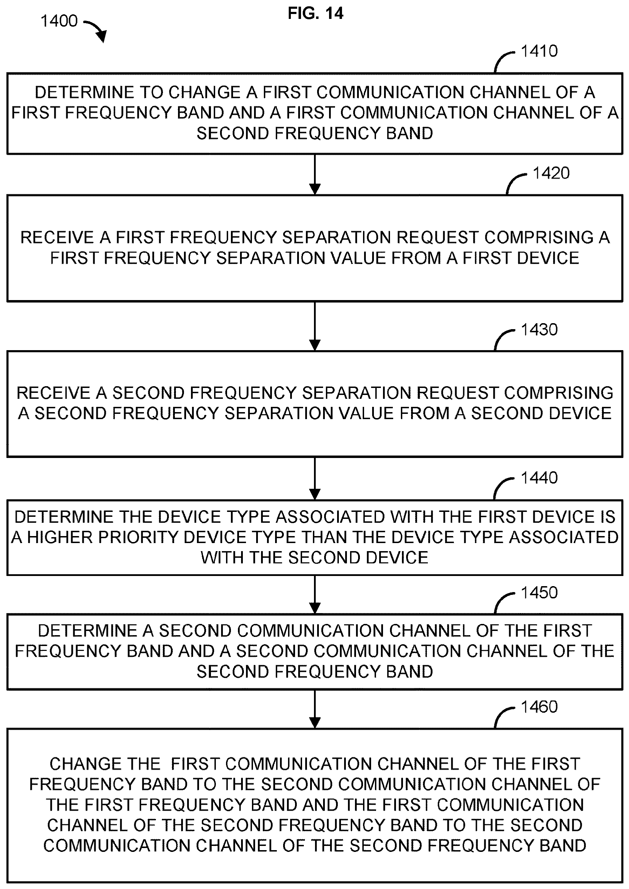

**FIG. 14** is a flowchart illustrating an example method **1400** for selecting channels in a first frequency band and a second frequency band. The method **1400** may be completed by a computing device **102** (e.g., a network device such as an access point or gateway) or another computing device. For example, the first frequency band and the second frequency band may be different. For example, the first frequency band may be a five gigahertz (GHz) wireless communications band and the second frequency band may be a six GHz wireless communications band. For example, the first frequency band may be a wireless communications frequency band other than the five GHz band and the second frequency band may be a wireless communications frequency band other than the six GHz frequency band. For example, the computing device **102** may be configured to simultaneously transmit and receive communications to and from the computing device **102.** For example, the computing device **102** may connect with and communicate with a plurality of wireless communication devices, such as devices **104-114.**

The computing device **102** may connect to one or more of the devices **104-114.** For example, the computing device **102** may connect to each of the devices **104-114** over a period of time. The computing device **102** may connect to the devices **104-114** for wireless communication. For example, the one or more of the devices **104-114** may connect to the computing device **102** using a first communication channel of the first frequency band and one or more of the devices **104-114** may connect to the computing device **102** using a first communication channel of the second frequency band. For example, one or more of the devices **104-114** may connect to the computing device **102** using both the first communication channel of the first frequency band and the first communication channel of the second frequency band.

The computing device **102** may communicate with a plurality of devices, such as the devices **104-114,** using a multi-link operation via a first communication channel of a first frequency band and a first communication channel of a second frequency band. For example, the second frequency band may be made up of communication frequencies that are greater than the communications frequencies of the first frequency band.

At **1410,** the computing device **102** may determine to change a communication channel on one or both of the first frequency band or the second frequency band for communicating with the wireless communication devices, such as the devices **104-114.** For example, the computing device **102** may determine to change one or both of the first communication channels based on bandwidth usage of the first channel, interference occurring on the first channel, a signal-to-noise ratio (e.g., the ratio satisfying a threshold), a determination that another network device (e.g., another access point) is also communicating on the first channel, or other network quality issues. For example, the computing device **102** may determine to select a different communication channel of the first frequency band and a different communication channel of the second frequency band. The computing device **102** may send a signal indicating an intent to change the communication channel on one or both of the first frequency band or the second frequency band. For example, the signal may be received by all or a portion of the plurality of devices **104-114.**

At **1420,** the computing device **102** may receive a first frequency separation request from a first device of the plurality of devices **104-114.** For example, the first frequency separation request may comprise a first frequency separation value. For example, the first frequency separation request may be received based on the first device of the plurality of devices **104-114** receiving the signal from the computing device **102** indicating an intent to change the communication channel on one or both of the first frequency band or the second frequency band. For example, the first frequency separation request may be received when the first device initially connects with the computing device **102.** The frequency separation value may be the amount of frequency separation (in MHz) between the second communication channel of the first frequency band and the second communication channel of the second frequency band desired by the particular device **104-114** sending the frequency separation request. For example, some devices **104-114** may desire a greater frequency separation value while other devices **104-114** may request a lesser frequency separation value or may not request a frequency separation value at all. For example, the first frequency value may be 240 MHz.

At **1430,** the computing device **102** may receive a second frequency separation request from a second device (e.g., device **108)** of the plurality of devices **104-114.** For example, the second frequency separation request may comprise a second frequency separation value. For example, the second frequency separation request may be received based on the second device **108** of the plurality of devices **104-114** receiving the signal from the computing device **102** indicating an intent to change the communication channel on one or both of the first frequency band or the second frequency band. For example, the second frequency separation request may be received when the second device **108** initially connects to the computing device **102.** The frequency separation value may be the amount of frequency separation (in MHz) between the second communication channel of the first frequency band and the second communication channel of the second frequency band desired by the second device **108,** of the plurality of devices **104-114,** sending the frequency separation request. For example, the second frequency separation value from the device **106** may be 480 MHz.

At **1440,** the computing device **102** may determine a first device type associated with the first device 106 is a higher priority device type than a second device type associated with the second device **108** of the plurality of devices **104-114.** For example, the computing device **102** may determine a device type associated with each of the first device **106** and the second device **108.** The determination of device types for the first device **106** and the second device **108** is for example purposes only, as in other examples the computing device **102** may determine the device type for a plurality of other device, such as the plurality of devices **104-114.** For example, the computing device **102** may determine the device type for the first device **106** and the second device **108** based on fingerprinting techniques of communications from respective first device **106** and the second device **108.** For example, the computing device **102** may determine the device type for the respective first device **106** and the second device **108** based on one or more of a differentiated services code point (DSCP) host name, a DSCP parameter arrangement, a MAC address for the respective first device **106** and second device **108,** or based on an evaluation of the types of packets and the contents of the packets received from the respective first device **106** and the second device **108.**

Each device type may have a corresponding priority level for evaluating frequency separation requests received from the device. For example, a first device type may be mesh extenders. The first device type may have the highest priority when evaluating frequency separation requests. For example, the computing device **102** may always attempt to satisfy the maximum frequency separation value requested by the devices in the first device type. For example, a second device type may include augmented reality devices and virtual reality devices. The second device type may have a lower priority than the first device type but may have the next highest priority to the first device type. For example, the computing device **102** will typically attempt to satisfy the maximum frequency separation value requested by devices in the second device type. For example, a third device type may include one or more of a smart phone, a tablet computer, a laptop computer, a desktop computer, or a wearable smart device. The third device type may have a lower priority than the first device type and the second device type, but may have the next highest priority to the second device type. For example, the computing device **102** will typically attempt to satisfy the maximum frequency separation value requested by devices in the third device type. For example, a fourth device type may include Internet-of-things (IoT) devices. The fourth device type may have a lower priority than the first device type, the second device type and the third device type, but may have the next highest priority to the third device type. For example, the computing device **102** may not determine the next communication channels of the first frequency band and the second frequency band based on frequency separation requests from devices in the fourth device type. For example, a fifth device type may include home appliance (e.g., refrigerator, dishwasher, clothes washer, dryer, etc.) and thermostat devices. The fifth device type may have a lower priority than the first device type, the second device type, the third device type and the fourth device type, but may have the next highest priority to the fourth device type. For example, the computing device **102** may not determine the next communication channels of the first frequency band and the second frequency band based on frequency separation requests from devices in the fifth device type. For example, the first device type, the second device type, and the third device type may be considered higher priority device types, while the fourth device type and the fifth device type may be considered lower priority device types.

In other examples, the line of distinction between higher priority device types and lower priority device types may be different, such as only the first device type is considered a higher priority level device type and the other device types are considered lower priority level device types (e.g., the computing device **102** may determine the next communication channels of the first and second frequency bands based on frequency separation requests from devices in the first device type and not determine the next communication channels of the first frequency band and the second frequency band based on frequency separation requests from devices in the second, third, fourth, and fifth device types); the first and second device types are considered a higher priority level device types and the remaining device types (third, fourth, and fifth) are considered lower priority level device types (e.g., the computing device **102** may determine the next communication channels of the first and second frequency bands based on frequency separation requests from devices in the first and second device types and may not determine the next communication channels of the first frequency band and the second frequency band based on frequency separation requests from devices in the third, fourth, and fifth device types); the first, second, third, and fourth device types are considered higher priority level device types and the remaining device types (e.g., fifth) are considered lower priority level device types (e.g., the computing device **102** may determine the next communication channels of the first and second frequency bands based on frequency separation requests from devices in the first, second, third and fourth device types and may not determine the next communication channels of the first frequency band and the second frequency band based on frequency separation requests from devices in the fifth device type). Furthermore, the line of distinction between higher priority level device types and lower priority level device types may be adjustable to include any of the device types in either of the higher or lower priority level groups. For example, the line of demarcation between which device types will be considered (based on their frequency separation requests) and which device types the frequency separation requests will not be considered can be positioned before or after any of the device types or priority level device types described herein, such that device types above (e.g., with a priority level higher (when first priority is considered higher than second and second is considered higher than third, etc.)) than the line of demarcation will have their frequency separation requests considered and those below (e.g., with a priority level lower) than the line of demarcation will not have their frequency requests considered in determining the next channels in the first and second frequency bands.

For example, the computing device **102** may determine that the first device **106** is a smart phone and therefore associated with or included in the third device type. Further, the computing device **102** may determine that second device **108** is an IoT device and therefore associated with or included in the fourth device type. At **1440,** the computing device **102** may determine that the device type (e.g., the third device type) associated with the first device **106** is a higher priority device type than the device type (e.g., the fourth device type) associated with the second device **108.** For example, based on the device type associated with the first device **106** having a higher priority than the device type associated with the second device **108,** the computing device may determine to attempt to satisfy the frequency separation request of the first device **106** rather than the frequency separation request of the second device **108.**

At **1450,** the network device **102** may determine a second communication channel for the first frequency band and/or a second communication channel for the second frequency band. For example, the second communication channel for the first frequency band and the second communication channel for the second frequency band may be determined based on the frequency separation value requested by the first device **106** (e.g., 160 MHz). For example, the second communication channel for the first frequency band and the second communication channel for the second frequency band may be determined so the frequency separation between the second communication channel for the first frequency band and the second communication channel for the second frequency band is greater than or equal to the frequency separation value requested by the first device **106.** For example, the frequency separation between the highest frequency of the second communication channel of the first frequency band and the lowest frequency of the second communication channel of the second frequency band is greater than or equal to the frequency separation value (e.g., 160 MHz) requested by the first device **106.** For example, the frequency separation between the highest frequency of the second communication channel of the first frequency band and the lowest frequency of the second communication channel of the second frequency band may not be greater than or equal to the frequency separation value (e.g., 480 MHz) requested by the second device **108,** as the second device was a lower priority device and therefore was not considered by the computing device 102 in selecting the second communication channel for the first frequency band and the second communication channel for the second frequency band. For example, the second communication channel of the first frequency band may be the same as the first communication channel of the first frequency band or the second communication channel of the second frequency band may be the same as the first communication channel of the second frequency band.

At **1460,** the computing device **102** may change the plurality of first communication sessions with at least a portion of the plurality of devices **104-114** on the first communication channel of the first frequency band to the second communication channel of the first frequency band. The computing device may change the plurality of second communication sessions with at least a portion of the plurality of devices **104-114** (e.g., at least devices **106-108)** on the first communication channel of the second frequency band to the second communication channel of the second frequency band. For example, the computing device **102** may determine if a channel of the first frequency band or the second frequency band is available to be selected based on the channel satisfying one or more thresholds associated with bandwidth availability, signal-to-noise ratio (SNR), interference, number of devices communicating on the channel or the like.

The computing device **102** may send a signal to the devices **104-114** indicating a change of channels to the second communication channel on the first frequency band and the second communication channel on the second frequency band. The network device **102** may then switch communications with the devices **104-114** from the first communication channel to the second communication channel of the first frequency band and from the first communication channel to the second communication channel of the second frequency band.

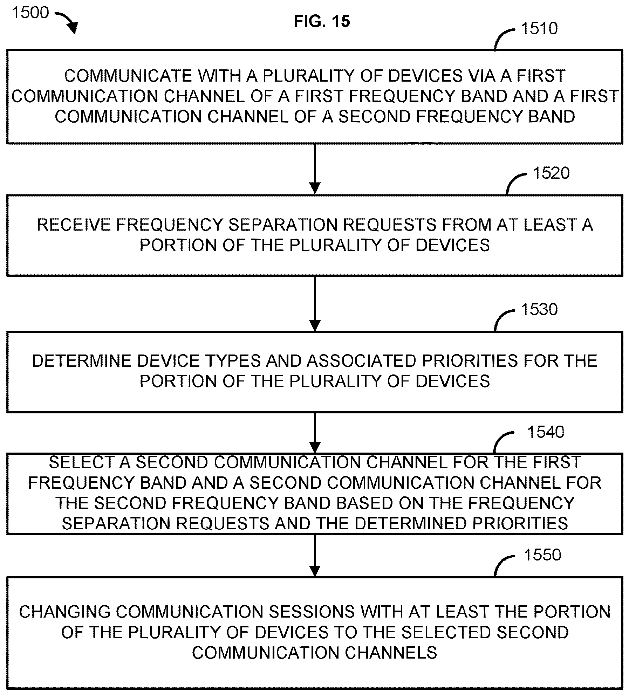

**FIG. 15** is a flowchart illustrating an example method **1500** for selecting channels in a first frequency band and a second frequency band. The method **1500** may be completed by a computing device **102** (e.g., a network device such as an access point or gateway) or another computing device. For example, the first frequency band and the second frequency band may be different. For example, the first frequency band may be a five gigahertz (GHz) wireless communications band and the second frequency band may be a six GHz wireless communications band. For example, the first frequency band may be a wireless communications frequency band other than the five GHz band and the second frequency band may be a wireless communications frequency band other than the six GHz frequency band. For example, one or more of the frequency bands may be other than the five GHz or six GHz frequency band. For example, the computing device **102** may be configured to simultaneously transmit and receive communications to and from the computing device **102.** For example, the computing device **102** may connect with and communicate with a plurality of wireless communication devices, such as devices **104-114.**

To initiate communication with one or more of the devices **104-114,** the computing device **102** may send or otherwise transmit one or more beacon signals. For example, a first beacon signal may be sent by the computing device **102** advertising the first channel of the first frequency band that the computing device **102** is communicating on and a second beacon signal may be sent by the computing device **102** advertising the first channel of the second frequency band that the computing device **102** is communicating on. The beacon signal may be received by one or more wireless communication devices, such as one or more of the devices **104-114.** For example, all or a portion of the devices **104-114** may be configured for multi-link operation, such that the particular device **104-114** may connect and communicate with the computing device via both the first communication channel of the first frequency band and the first communication channel of the second frequency band.

A request for a device to connect to the computing device **102** may be received by the computing device **102.** The request may be sent by one of the devices **104-114.** For example, the request may comprise a probe request, an authentication request, or an association request. For example, the request may be sent by one of the devices **104-114** using one of the first communication channel of the first frequency band or the first communication channel of the second frequency band. The computing device **102** may connect to one or more of the devices **104-114.** For example, the computing device **102** may connect to each of the devices **104-114** over a period of time for wireless communication. For example, the one or more of the devices **104-114** may connect to the computing device **102** using the first communication channel of the first frequency band and one or more of the devices **104-114** may connect to the computing device **102** using the first communication channel of the second frequency band. For example, one or more of the devices **104-114** may connect to the computing device **102** using both the first communication channel of the first frequency band and the first communication channel of the second frequency band.

At **1510,** the computing device **102** may communicate with a plurality of devices, such as the devices **104-114** via a first communication channel of a first frequency band and/or a first communication channel of a second frequency band. For example, the second frequency band may be made up of communication frequencies that are greater than the communications frequencies of the first frequency band. For example, the computing device 102 may communicate with the plurality of devices using a multi-link operation.

For example, the computing device **102** may determine to change a communication channel on at least one of the first frequency band or the second frequency band. For example, the computing device **102** may determine to change a channel based on bandwidth usage of the first channel, interference occurring on the first channel, a signal-to-noise ratio (e.g., the ratio satisfying a threshold), a determination that another network device (e.g., another access point) is also communicating on the first channel, or other network quality issues. For example, the computing device **102** may determine to change the first channel of each of the first frequency band and the second frequency band to a second channel of the first frequency band and a second channel of the second frequency band. The computing device **102** may send a signal indicating an intent to change the communication channel on one or both of the first frequency band or the second frequency band. For example, the signal may be received by all or a portion of the plurality of devices **104-114.**

At **1520,** the computing device **102** may receive frequency separation requests from at least a portion of the plurality of devices **104-114.** For example, the computing device **102** may receive the frequency separation request from a device (e.g., of the plurality of devices **104-114)** when the device connects or begins a communication session with the computing device **102.** For example, the computing device **102** may receive the frequency separation request from a device (e.g., of the plurality of devices **104-114)** when the device receives an indication that the computing device **102** is going to change the communication channel on at least one of the first frequency band or the second frequency band. For example, each frequency separation request may comprise a frequency separation value. The frequency separation value may be the amount of frequency separation (in MHz) between the second communication channel of the first frequency band and the second communication channel of the second frequency band desired by the particular device **104-114** sending the frequency separation request. For example, some devices **104-114** may desire a greater frequency separation value while other devices **104-114** may request a lesser frequency separation value or may not request a frequency separation value at all. For example, the plurality of requests for frequency separation may be received based on the devices **104-114** receiving the signal informing the devices **104-114** of the channel change by the computing device **102.** For example, the device **104** may request a frequency separation between the channel of the first frequency band and the channel of the second frequency band of 80 megahertz (MHz), the device **106** may request a frequency separation between the channel of the first frequency band and the channel of the second frequency band of 160 MHz, the device **108** may request a frequency separation between the channel of the first frequency band and the channel of the second frequency band of 480 MHz, the device **110** may request a frequency separation between the channel of the first frequency band and the channel of the second frequency band of 400 MHz, the device **112** may request a frequency separation between the channel of the first frequency band and the channel of the second frequency band of 160 MHz, and the device **114** may request a frequency separation between the channel of the first frequency band and the channel of the second frequency band of 160 MHz.

At **1530,** the computing device **102** may determine device types and associated priorities for the portion of the plurality of devices that made frequency separation requests. For example, the computing device **102** may determine a first portion of the plurality of devices **104-114** associated with one or more higher priority level device types and a second portion of the plurality of devices associated with one or more lower priority level device types. For example, the computing device **102** may make the determination based on the determined device type associated with or for each of the plurality of devices **104-114.** For example, devices associated with a first device type, a second device type, or a third device type (as discussed below) may be considered to be associated with the one or more higher priority level device types and devices associated with the fourth device type and fifth device type may be considered associated with the one or more lower priority level device types. For example, devices associated with the one or more higher priority level device types may include mesh extenders, devices subordinate to the computing device **102,** augmented reality devices, virtual reality devices, a smart phone, a tablet computer, a laptop computer, a desktop computer, or a wearable smart device (e.g., smart watch, smart glasses, etc.). For example, devices associated with the one or more lower priority level device types may include IoT devices, home appliances, and thermostats.

The computing device **102** may determine a device type associated with each of the plurality of devices **104-114.** For example, the computing device **102** may determine the device type for a device of the plurality of devices **104-114** based on fingerprinting techniques of communications from the device of the plurality of devices **104-114.** For example, the computing device **102** may determine the device type for the device based on one or more of a differentiated services code point (DSCP) host name, a DSCP parameter arrangement, a MAC address for the device of the plurality of devices **104-114,** or based on an evaluation of the types of packets and the contents of the packets received from the device of the plurality of devices **104-114.**

Each device type may have a corresponding priority level for evaluating frequency separation requests received from the device. For example, a first device type may be mesh extenders. The first device type may have the highest priority when evaluating frequency separation requests. For example, the computing device **102** may always attempt to satisfy the maximum frequency separation value requested by the devices in the first device type. For example, a second device type may include augmented reality devices and virtual reality devices. The second device type may have a lower priority than the first device type but may have the next highest priority to the first device type. For example, the computing device **102** will typically attempt to satisfy the maximum frequency separation value requested by devices in the second device type. For example, a third device type may include one or more of a smart phone, a tablet computer, a laptop computer, a desktop computer, or a wearable smart device. The third device type may have a lower priority than the first device type and the second device type, but may have the next highest priority to the second device type. For example, the computing device **102** will typically attempt to satisfy the maximum frequency separation value requested by devices in the third device type. For example, a fourth device type may include Internet-of-things (IoT) devices. The fourth device type may have a lower priority than the first device type, the second device type and the third device type, but may have the next highest priority to the third device type. For example, the computing device **102** may not determine the next communication channels of the first frequency band and the second frequency band based on frequency separation requests from devices in the fourth device type. For example, a fifth device type may include home appliance (e.g., refrigerator, dishwasher, clothes washer, dryer, etc.) and thermostat devices. The fifth device type may have a lower priority than the first device type, the second device type, the third device type and the fourth device type, but may have the next highest priority to the fourth device type. For example, the computing device **102** may not determine the next communication channels of the first frequency band and the second frequency band based on frequency separation requests from devices in the fifth device type. For example, the first device type, the second device type, and the third device type may be considered higher priority device types, while the fourth device type and the fifth device type may be considered lower priority device types.

In other examples, the line of distinction between higher priority device types and lower priority device types may be different, such as only the first device type is considered a higher priority level device type and the other device types are considered lower priority level device types (e.g., the computing device \**102** may determine the next communication channels of the first and second frequency bands based on frequency separation requests from devices in the first device type and not determine the next communication channels of the first frequency band and the second frequency band based on frequency separation requests from devices in the second, third, fourth, and fifth device types); the first and second device types are considered a higher priority level device types and the remaining device types (third, fourth, and fifth) are considered lower priority level device types (e.g., the computing device **102** may determine the next communication channels of the first and second frequency bands based on frequency separation requests from devices in the first and second device types and may not determine the next communication channels of the first frequency band and the second frequency band based on frequency separation requests from devices in the third, fourth, and fifth device types); the first, second, third, and fourth device types are considered higher priority level device types and the remaining device types (e.g., fifth) are considered lower priority level device types (e.g., the computing device **102** may determine the next communication channels of the first and second frequency bands based on frequency separation requests from devices in the first, second, third and fourth device types and may not determine the next communication channels of the first frequency band and the second frequency band based on frequency separation requests from devices in the fifth device type). Furthermore, the line of distinction between higher priority level device types and lower priority level device types may be adjustable to include any of the device types in either of the higher or lower priority level groups.

The computing device **102** may determine the frequency separation value as a maximum frequency separation value requested that is associated with at least one of the first portion of the plurality of devices **104-114** associated with the one or more higher priority level devices. For example, the computing device **102** may determine the frequency separation value as the most requested frequency separation value by the first portion of the plurality of devices **104-114** associated with the one or more higher priority level devices, similar to that described in **FIG. 8****.** For example, the computing device 102 may determine the frequency separation value as the mean or average of the requested frequency separation values by the first portion of the plurality of devices **104-114** associated with the one or more higher priority level devices, similar to that described in **FIG. 9****.** For example, the computing device may evaluate each frequency separation value requested by the first portion of the plurality of devices **104-114** determined to have a device type that is included in the one or more higher priority level devices.

At **1540,** the network device **102** may select a second communication channel for the first frequency band and/or a second communication channel for the second frequency band based on the frequency separation requests and the determined priorities. For example, the second communication channel for the first frequency band and the second communication channel for the second frequency band may be determined based on the determined frequency separation value (e.g., the maximum, most requested, or mean of the values) requested for the one or more higher level priority devices. For example, the second communication channel for the first frequency band and the second communication channel for the second frequency band may be determined so the frequency separation between the second communication channel for the first frequency band and the second communication channel for the second frequency band is greater than or equal to the determined frequency separation value (e.g., the maximum, most requested, or mean of the values) requested for the one or more higher level priority devices. For example, the frequency separation between the highest frequency of the second communication channel of the first frequency band and the lowest frequency of the second communication channel of the second frequency band is greater than or equal to the determined frequency separation value for the one or more higher level priority devices. For example, the second communication channel of the first frequency band may be the same as the first communication channel of the first frequency band or the second communication channel of the second frequency band may be the same as the first communication channel of the second frequency band.

At **1550,** the computing device **102** may change the communication sessions with at least the portion of the plurality of devices to the selected second communication channel of the first frequency band and/or the second communication channel of the second frequency band. For example, the computing device **102** may change the plurality of first communication sessions with the portion of the plurality of devices **104-114** on the first communication channel of the first frequency band to the second communication channel of the first frequency band. The computing device **102** may change the plurality of second communication sessions with the portion of the plurality of devices **104-114** on the first communication channel of the second frequency band to the second communication channel of the second frequency band. For example, the second communication channel of the first frequency band may be separated from the second communication channel of the second frequency band by an amount of megahertz that satisfies the determined frequency separation value (e.g., the maximum, most requested, or mean of the values) requested for the portion of the devices **104-114** associated with the one or more higher priority level devices. For example, the computing device **102** may determine if a channel of the first frequency band or the second frequency band is available to be selected based on the channel satisfying one or more thresholds associated with bandwidth availability, signal-to-noise ratio (SNR), interference, number of devices communicating on the channel or the like.

The computing device **102** may send a signal to the devices **104-114** indicating a change of channels to the second communication channel on the first frequency band and the second communication channel on the second frequency band.

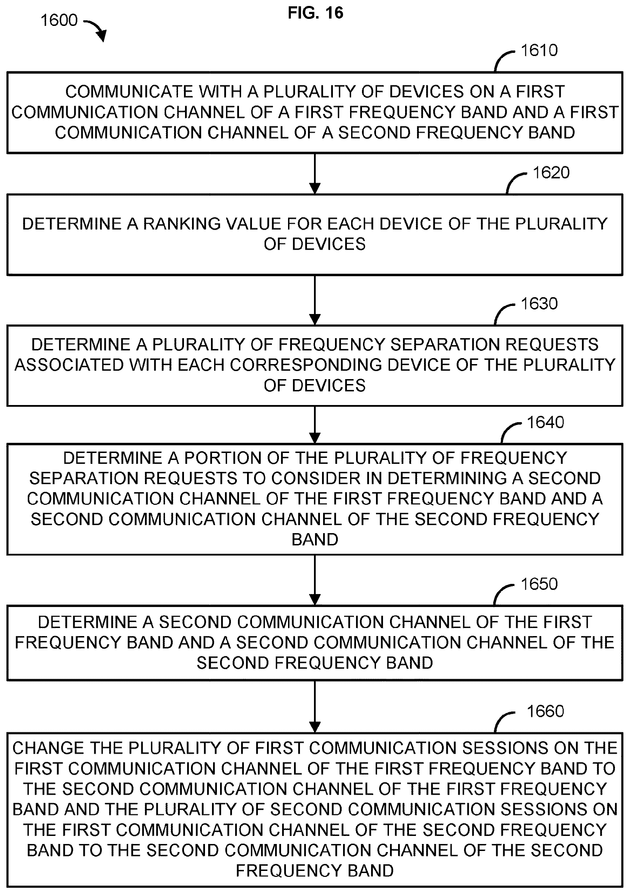

**FIG. 16** is a flowchart illustrating an example method **1600** for selecting channels in a first frequency band and a second frequency band. The method **1600** may be completed by a computing device **102** (e.g., a network device such as an access point or gateway) or another computing device. For example, the first frequency band and the second frequency band may be different. For example, the first frequency band may be a five gigahertz (GHz) wireless communications band and the second frequency band may be a six GHz wireless communications band. For example, the first frequency band may be a wireless communications frequency band other than the five GHz band and the second frequency band may be a wireless communications frequency band other than the six GHz frequency band. For example, the computing device **102** may be configured to simultaneously transmit and receive communications to and from the computing device **102.** For example, the computing device **102** may connect with and communicate with a plurality of wireless communication devices, such as devices **104-114.**

To initiate communication with one or more of the devices **104-114,** the computing device **102** may send or otherwise transmit one or more beacon signals. The beacon signals may comprise a beacon frame. For example, each beacon signal may comprise an identifier of the computing device **102,** a service-set ID (SSID), a basic service-set identifier (BSSID), security capabilities (e.g., open, WEP, WPA, WPA2), the channel width (e.g., 20, 40, 80, 160), connection speed, the beacon interval, and a channel of the frequency band the computing device **102** is communicating on. For example, a first beacon signal may be sent by the computing device **102** advertising the first channel of the first frequency band that the computing device **102** is communicating on and a second beacon signal may be sent by the computing device **102** advertising the first channel of the second frequency band that the computing device **102** is communicating on. The beacon signal may be received by one or more wireless communication devices, such as one or more of the devices **104-114.** For example, all or a portion of the devices **104-114** may be configured for multi-link operation, such that the particular device **104-114** may connect and communicate with the computing device via both the first communication channel of the first frequency band and the first communication channel of the second frequency band.

A request for a device to connect to the computing device **102** may be received by the computing device **102.** The request may be sent by one of the devices **104-114.** For example, the request may comprise a probe request, an authentication request, or an association request. For example, the request may be sent by one of the devices **104-114** using one of the first communication channel of the first frequency band or the first communication channel of the second frequency band. For example, the request may be sent in response to one of the devices **104-114** receiving the beacon signal from the computing device **102.** For example, each of the devices **104-114** may send their own request to connect to the computing device **102** at different times and potentially over an extended period of time.

The computing device **102** may connect to one or more of the devices **104-114.** For example, the computing device **102** may connect to each of the devices **104-114** over a period of time. The computing device **102** may connect to the devices **104-114** for wireless communication. For example, the one or more of the devices **104-114** may connect to the computing device **102** using the first communication channel of the first frequency band and one or more of the devices **104-114** may connect to the computing device **102** using the first communication channel of the second frequency band. For example, one or more of the devices **104-114** may connect to the computing device **102** using both the first communication channel of the first frequency band and the first communication channel of the second frequency band.

At **1610,** the computing device **102** may communicate with a plurality of devices, such as the devices **104-114** via a first communication channel of a first frequency band and a first communication channel of a second frequency band. For example, the computing device '01 may communication with the plurality of devices using a multi-link operation. For example, the second frequency band may be made up of communication frequencies that are greater than the communications frequencies of the first frequency band.

The computing device **102** may determine to select a different channel on one or both of the first frequency band or the second frequency band for communicating with the wireless communication devices, such as the devices **104-114.** For example, the computing device **102** may determine to select a different channel based on bandwidth usage of the first channel, interference occurring on the first channel, a signal-to-noise ratio (e.g., the ratio satisfying a threshold), a determination that another network device (e.g., another access point) is also communicating on the first channel, or other network quality issues. For example, the computing device **102** may determine to select a second channel of the first frequency band and a second channel of the second frequency band. The computing device **102** may send a signal indicating an intent to select a different channel on one or both of the first frequency band or the second frequency band. For example, the signal may be received by all or a portion of the plurality of devices **104-114.**

The computing device **102** may receive from all or at least a portion of the plurality of devices **104-114** a plurality of frequency separation requests. For example, the computing device **102** may receive the frequency separation request from a device (e.g., of the plurality of devices **104-114)** when the device connects or begins a communication session with the computing device **102.** For example, the computing device **102** may receive the frequency separation request from a device (e.g., of the plurality of devices **104-114)** when the device receives an indication that the computing device **102** is going to change the communication channel on at least one of the first frequency band or the second frequency band. For example, each frequency separation request may comprise a frequency separation value. The frequency separation value may be the amount of frequency separation (in MHz) between the second communication channel of the first frequency band and the second communication channel of the second frequency band desired by the particular device **104-114** sending the frequency separation request. For example, some devices **104-114** may desire greater frequency separation values while other devices **104-114** may request lesser frequency separation values or may not request a frequency separation value at all. For example, the device **104** may request a frequency separation between the channel of the first frequency band and the channel of the second frequency band of 80 megahertz (MHz), the device **106** may request a frequency separation between the channel of the first frequency band and the channel of the second frequency band of 160 MHz, the device **108** may request a frequency separation between the channel of the first frequency band and the channel of the second frequency band of 480 MHz, the device **110** may request a frequency separation between the channel of the first frequency band and the channel of the second frequency band of 400 MHz, the device **112** may request a frequency separation between the channel of the first frequency band and the channel of the second frequency band of 160 MHz, and the device **114** may request a frequency separation between the channel of the first frequency band and the channel of the second frequency band of 160 MHz.

At **1620,** the computing device **102** may determine a ranking value for each device of the plurality of devices (e.g., the devices **104-114).** For example, the computing device **102** may make the determination of the ranking value for each device of the plurality of devices based on an identifier of the respective device (e.g., one or more of the MAC address for the device, device name, device type for the device, manufacturer of the device, differentiated services code point (DSCP) host name, a DSCP parameter arrangement, etc.). For example, the computing device **102** may include a table or listing of all devices that have previously connected to the computing device **102** and the ranking order for each of those devices. For example, when a new device connects to the computing device **102,** the computing device may receive the device identifier for that device, determine the type of device that it is and/or the user associated with the device, select a position within the ranking values for the device based on one or both of the type of device and the user associated with the device, and place that device into the table or listing with its associated ranking value. For example device **104** may be a hub or mesh extender and may have the highest ranking value (1), device **106** may be a virtual reality or augmented reality device and have the next highest ranking value (2), device **112** may be a smartphone or tablet computer associated with user 1 and may have the next highest ranking value (3), device **114** may be a smartphone or tablet computer and associated with user 2 and may have the next highest ranking value (4), device **108** may be a smart thermostat and have a next highest ranking value (5), and device **110** may be smart lighting or another IoT device and have the next highest ranking value (6). While only six device examples are provided above, this is for example purposes only, as the number of devices connected to the network could be higher or lower. Furthermore, some devices connected to the network may not have an associated ranking value and thus, may not be considered at all by the computing device **102,** when evaluating which frequency separation requests to consider when changing channels on one or both of the first and second frequency bands. In addition, a user associated with the computing device **102** may set the ranking values as desired such that in some instances a smartphone may have a higher ranking value than a hub or range extender and/or virtual reality and augmented reality devices or some IoT devices may have higher ranking values than some smartphones/tablets associated with certain users.

At **1630,** the computing device **102** may determine a frequency separation value requested that is associated with each, or at least a portion, of the plurality of devices connected to the network (e.g., devices **104-114)** of the computing device **102.** For example, not every device may send a frequency separation request to the computing device **102.** The computing device **102** may receive the frequency separation request from the particular device when the device begins a communication session with the computing device or when the device receives the indication from the computing device **102,** that the computing device **102** wants to change at least one of the first communication channel of the first frequency band or the second communication channel of the second frequency band. For example, device **104** may send a frequency separation request for an 80 MHz separation between channels, device **106** may send a frequency separation request for a 160 MHz separation, device **108** may send a frequency separation request for a 480 MHz separation, device **110** may send a frequency separation request for a 400 MHz separation, device **112** may send a frequency separation request for a 160 MHz separation, and device **114** may send a frequency separation request for a 160 MHz separation.

At **1640,** the computing device **102** may determine a portion of the plurality of frequency separation requests to consider in determining a second communication channel of the first frequency band and/or a second communication channel of the second frequency band. For example, the computing device **102** may determine the portion of the plurality of frequency separation request to consider based on the ranking of each of the devices. For example, the computing device **102** may consider the frequency separation requests from the devices based on a device ranking threshold. For example, the computing device **102** may consider the frequency separation requests from devices that satisfy the device ranking threshold. For example, devices may satisfy the device ranking threshold by having a ranking higher than or higher than or equal to the device ranking threshold. For example, if the device ranking threshold was 10 and there were 20 devices currently connected to the network, having provided a frequency separation request to the computing device **102,** and having been ranked 1-20 as described in **1620,** the computing device **102** may consider the frequency separation requests from the devices ranked 1-9 or 1-10, as the ranking for those devices would be higher than or higher than or equal to the device ranking threshold of 10. For example, the device ranking threshold may be a set value or may be adjustable. For example, the device ranking threshold may be adjustable based on user input or based on the number of devices connected to the particular network of the computing device **102.**

The computing device **102** may determine the frequency separation value needed between the second communication channel of the first frequency band and the second communication channel of the second frequency band based on the frequency separation requests received from the devices that satisfy the device ranking threshold. For example, the computing device **102** may not consider the frequency separation requests received from devices that do not satisfy the device ranking threshold (e.g., have a ranking that is lower than or lower than or equal to the device ranking threshold) when determining the frequency separation value needed. For example, the computing device **102** may determine the maximum frequency separation requested from the devices satisfying the device ranking threshold (substantially similar to as it is described in **FIG. 7** above) as the frequency separation value. For example, the computing device **102** may determine the amount of the frequency separation requested by the most devices of the devices satisfying the device ranking threshold (substantially similar to as it is described in **FIG. 8** above) as the frequency separation value. For example, the computing device **102** may determine the average of the amount of the frequency separation requested by the devices satisfying the device ranking threshold (substantially similar to as it is described in **FIG. 9** above) as the frequency separation value

At **1650,** the network device **102** may determine a second communication channel for the first frequency band and/or a second communication channel for the second frequency band. For example, the second communication channel for the first frequency band and the second communication channel for the second frequency band may be determined based on the determined frequency separation value. For example, the second communication channel for the first frequency band and the second communication channel for the second frequency band may be determined so the frequency separation between the second communication channel for the first frequency band and the second communication channel for the second frequency band is greater than or equal to the determined frequency separation value. For example, the frequency separation between the highest frequency of the second communication channel of the first frequency band and the lowest frequency of the second communication channel of the second frequency band is greater than or equal to the determined frequency separation value. For example, the second communication channel of the first frequency band may be the same as the first communication channel of the first frequency band or the second communication channel of the second frequency band may be the same as the first communication channel of the second frequency band.

At **1660,** the computing device **102** may change the plurality of first communication sessions with at least a portion of the plurality of devices **104-114** on the first communication channel of the first frequency band to the second communication channel of the first frequency band. The computing device **102** may change the plurality of second communication sessions with at least a portion of the plurality of devices **104-114** on the first communication channel of the second frequency band to the second communication channel of the second frequency band. For example, the second communication channel of the first frequency band may be separated from the second communication channel of the second frequency band by an amount of megahertz that satisfies the determined frequency separation value. For example, the computing device **102** may determine if a channel of the first frequency band or the second frequency band is available to be selected based on the channel satisfying one or more thresholds associated with bandwidth availability, signal-to-noise ratio (SNR), interference, number of devices communicating on the channel or the like.

The computing device **102** may send a signal to the devices **104-114** indicating a change of channels to the second communication channel on the first frequency band and/or the second communication channel on the second frequency band. The computing device **102** may then switch communications with the devices **104-114** from the first communication channel to the second communication channel of the first frequency band and/or from the first communication channel to the second communication channel of the second frequency band.

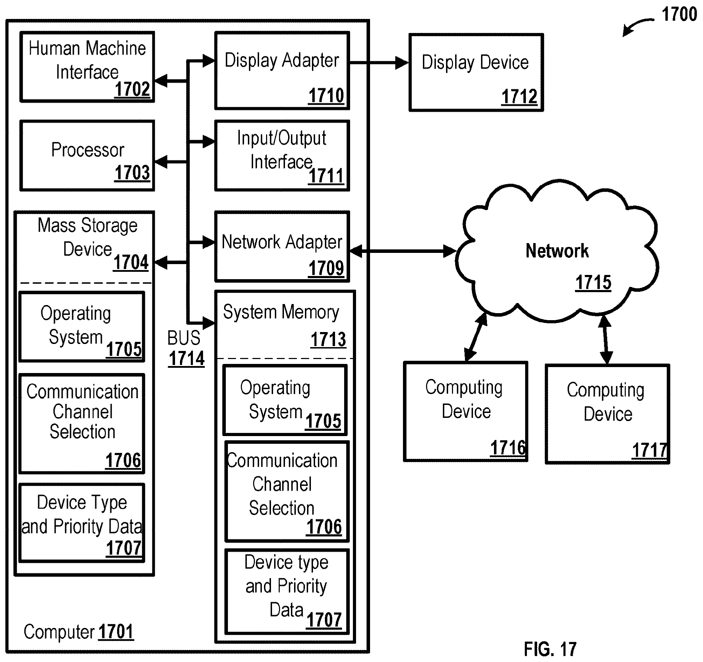

**FIG. 17** shows a block diagram of an example system **1700** and computing device **1701** (e.g., computer) for determining and selecting new communication channels for one or more of a first frequency band or a second frequency band. Any device/component described herein (e.g., the computing device **102** or the devices **104-114** may be the computing device **1701** as shown in **FIG. 17****.**

The computing device **1701** may include one or more processors **1703,** a system memory **1713,** and a bus 1714 that couples various components of the computing device **1701** including the one or more processors **1703** to the system memory **1713.** In the case of multiple processors **1703,** the computing device **1701** may utilize parallel computing.

The bus **1714** may include one or more of several possible types of bus structures, such as a memory bus, memory controller, a peripheral bus, an accelerated graphics port, and a processor or local bus using any of a variety of bus architectures.

The computing device **1701** may operate on and/or include a variety of computer-readable media (e.g., non-transitory). Computer-readable media may be any available media that is accessible by the computing device 1701 and includes, non-transitory, volatile and/or non-volatile media, removable and non-removable media. The system memory **1713** has computer-readable media in the form of volatile memory, such as random access memory (RAM), and/or non-volatile memory, such as read-only memory (ROM). The system memory **1713** may store data such as device type and priority data **1707** and/or program modules such as an operating system **1705** and a communication channel selection system **1706** that are accessible to and/or are operated on by the one or more processors **1703.** The device type and priority data **1707** may include device type information and priority indications (e.g., static IP addresses) associated with one or more devices, such as the computing devices **1716,** 1717.

The computing device **1701** may also include other removable/non-removable, volatile/non-volatile computer storage media. The mass storage device **1704** may provide non-volatile storage of computer code, computer-readable instructions, data structures, program modules, and other data for the computing device **1701.** The mass storage device **1704** may be a hard disk, a removable magnetic disk, a removable optical disk, magnetic cassettes or other magnetic storage devices, flash memory cards, CD-ROM, digital versatile disks (DVD) or other optical storage, random access memories (RAM), read-only memories (ROM), electrically erasable programmable read-only memory (EEPROM), and the like.

Any number of program modules may be stored on the mass storage device **1704.** For example, an operating system **1705** and the communication channel selection system **1706** may be stored on the mass storage device **1704.** Device type and priority data **1707** may also be stored on the mass storage device **1704.** The device type and priority data **1707** may be stored in any of one or more databases known in the art. The databases may be centralized or distributed across multiple locations within the network **1715.**

A user may enter commands and information into the computing device **1701** via an input device (not shown). Such input devices comprise, but are not limited to, a keyboard, pointing device (e.g., a computer mouse, remote control), a microphone, a joystick, a scanner, tactile input devices such as gloves, and other body coverings, motion sensor, and the like. These and other input devices may be connected to the one or more processors **1703** via a human machine interface **1702** that is coupled to the bus **1714,** but may be connected by other interface and bus structures, such as a parallel port, game port, an IEEE 1394 Port (also known as a Firewire port), a serial port, network adapter **1709,** and/or a universal serial bus (USB).

A display device **1712** may also be connected to the bus **1714** via an interface, such as a display adapter **1710.** It is contemplated that the computing device **1701** may have more than one display adapter **1710** and the computing device **1701** may have more than one display device **1712.** A display device **1712** may be a monitor, an LCD (Liquid Crystal Display), light-emitting diode (LED) display, television, smart lens, smart glass, and/ or a projector. In addition to the display device **1712,** other output peripheral devices may comprise components such as speakers (not shown) and a printer (not shown) which may be connected to the computing device **1701** via Input/Output Interface **1711.** Any step and/or result of the methods may be output (or caused to be output) in any form to an output device. Such output may be any form of visual representation, including, but not limited to, textual, graphical, animation, audio, tactile, and the like. The display device **1712** and computing device **1701** may be part of one device, or separate devices.

The computing device **1701** may operate in a networked environment using logical connections to one or more remote computing devices **1716, 1717.** The remote computing devices **1716, 1717** may correspond to the devices **104-114** of FIG. 1 and may comprise a mesh extender, subordinate device, augmented reality device, virtual reality device, personal computer, computing station (e.g., workstation), portable computer (e.g., laptop, mobile phone, smart phone tablet computer), smart television, set-top-box, smart device (e.g., smartphone, smartwatch, activity tracker, smart apparel, smart accessory), an IoT device, a thermostat, a home appliance or other common network nodes, and so on. Logical connections between the computing device **1701** and a remote computing devices **1716, 1717** may be made via one or more of a local network devices, a remote network device, and/or a network **1715,** such as a local area network (LAN) and/or a general wide area network (WAN). For example, the computing device **1701** may comprise a router, access point, or gateway. Such network connections with the computing device **1701** may be through a network adapter **1709.** The network adapter **1709** may be implemented in both wired and wireless environments. Such networking environments are conventional and commonplace in dwellings, offices, enterprise-wide computer networks, intranets, and the Internet.

Application programs and other executable program components such as the operating system 1705 and the communication channel selection system **1706** are shown herein as discrete blocks, although it is recognized that such programs and components may reside at various times in different storage components of the computing device **1701,** and are executed by the one or more processors **1703** of the computing device **1701.** An implementation of the communication channel selection system **1706** may be stored on or sent across some form of computer-readable media. Any of the disclosed methods may be performed by processor-executable instructions embodied on computer-readable media.

While specific configurations have been described, it is not intended that the scope be limited to the particular configurations set forth, as the configurations herein are intended in all respects to be possible configurations rather than restrictive.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of configurations described in the specification.

It will be apparent to those skilled in the art that various modifications and variations may be made without departing from the scope or spirit. Other configurations will be apparent to those skilled in the art from consideration of the specification and practice described herein. It is intended that the specification and described configurations be considered as exemplary only, with a true scope and spirit being indicated by the following claims.

## Claims

1. A method comprising:
communicating, by a computing device, with a plurality of devices via a first communication channel of a first frequency band and a first communication channel of a second frequency band;
receiving frequency separation requests from at least a portion of the plurality of devices;
determining device types and associated priorities for the portion of the plurality of devices;
selecting a second communication channel for the first frequency band and a second communication channel for the second frequency band based on the frequency separation requests and the determined priorities for the portion of the plurality of devices; and
changing communication sessions with at least the portion of the plurality of devices to the selected second communication channel for the first frequency band and the second communication channel for the second frequency band.

2. The method of claim 1, wherein determining device types and associated priorities for the portion of the plurality of devices comprises:
determining, based on a device type, of a plurality of device types, associated with each of the portion of the plurality of devices, a first portion of the plurality of devices associated with one or more higher priority level device types and a second portion of the plurality of devices associated with one or more lower priority level device types.

3. The method of claim 2, further comprising determining a maximum frequency separation request associated with at least one of the first portion of the plurality of devices associated with the one or more higher priority level devices.

4. The method of any one of claims 1-3, wherein the first communication channel of the first frequency band is the same as the second communication channel of the first frequency band

5. The method of any one of claims 1-3, wherein the first communication channel of the second frequency band is the same as the second communication channel of the second frequency band.

6. The method of any one of claims 2-5, wherein selecting the second communication channel for the first frequency band and the second communication channel for the second frequency band based on the frequency separation requests and the determined priorities for the portion of the plurality of devices comprises determining, based on a maximum frequency separation request from a first portion of the portion of the plurality of devices associated with one or more higher priority level device types, the second communication channel of the first frequency band and the second communication channel of the second frequency band.

7. The method of any one of claims 3-6, wherein a frequency separation between a highest frequency of the second communication channel of the first frequency band and the lowest frequency of the second communication channel of the second frequency band is greater than or equal to the maximum frequency separation request.

8. The method of any one of claims 1-7, further comprising determining, for each of the portion of the plurality of devices, a determined device type, of the plurality of device types, for each respective device of the portion of the plurality of devices.

9. The method of any one of claim 1-8, wherein communicating with the plurality of devices via the first communication channel comprises communicating, with the plurality of devices, via a plurality of first communication sessions on the first communication channel.

10. The method of any one of claims 1-9, wherein the higher priority level device types have a higher priority than the lower priority level device types.

11. The method of any one of claims 1-10, further comprising:
determining a first portion of the plurality of devices associated with one or more higher priority level device types; and
determining, based on a frequency separation request, of the received frequency separation requests, associated with at least one of the first portion of the plurality of devices associated with the one or more higher priority level devices, the second communication channel for the first frequency band and the second communication channel for the second frequency band.

12. The method of any one of claims 1-11, further comprising:
sending, by the computing device, a communication beacon; and
initiating, by the computing device, communication with the plurality of devices on the first communication channel of the first frequency band and the first communication channel of the second frequency band.

13. One or more computer-readable media storing processor-executable instructions thereon that, when executed by at least one processor, cause the at least one processor to perform the method of any one of claims 1-12.

14. A system comprising:
a computing device configured to perform the method of any one of claims 1-12; and
the plurality of device configured to communicate with the computing device via the first communication channel of the first frequency band and the first communication channel of the second frequency band.

15. An apparatus comprising:
one or more processors; and
memory storing processor-executable instructions that, when executed by the one or more processors, cause the apparatus to perform the method of any one of claims 1-12.
